# EUROPÄISCHE PATENTSCHRIFT

(11) **EP 2 909 505 B1**
(45) Veröffentlichungstag und Bekanntmachung des Hinweises auf die Patenterteilung: **22.03.2017**
(21) Anmeldenummer: 13756178.3
(22) Anmeldetag: 04.09.2013
(51) Int. Cl.: F16H 3/66, B60K 6/48, B60K 6/365

(54) **PLANETENGETRIEBE FÜR EINEN HYBRIDANTRIEB EINES KRAFTFAHRZEUGS**
PLANETARY GEAR SYSTEM FOR A HYBRID DRIVE OF A MOTOR VEHICLE
BOÎTE DE VITESSES ÉPICYCLOÏDALE POUR UN ENTRAÎNEMENT HYBRIDE DE VÉHICULE AUTOMOBILE

(30) Priorität: 19.10.2012 DE 102012219125
(43) Veröffentlichungstag der Anmeldung: 26.08.2015
(73) Patentinhaber: ZF Friedrichshafen AG, 88046 Friedrichshafen (DE)
(72) Erfinder: GRIESMEIER, Uwe, 88677 Markdorf (DE); BECK, Stefan, 88097 Eriskirch (DE); KALTENBACH, Johannes, 88048 Friedrichshafen (DE)
(86) Internationale Anmeldenummer: PCT/EP2013/068243
(87) Internationale Veröffentlichungsnummer: WO 2014/060143

(56) Entgegenhaltungen:
- DE-A1-102006 056 753
- DE-A1-102007 022 776
- KR-A- 20110 131 938

## Beschreibung

Die Erfindung betrifft ein Planetengetriebe für einen Hybridantrieb eines Kraftfahrzeugs gemäß dem Oberbegriff des Patentanspruchs 1.

Bei Antriebssträngen von Kraftfahrzeugen in Parallelhybridbauweise, mit einem Getriebe, einem Verbrennungsmotor und einer Elektromaschine, kann die Elektromaschine an verschiedenen Stellen in den Antriebstrang integriert werden. Meistens ist eine Elektromaschine antriebstechnisch am Getriebeeingang installiert, die zusätzliche Hybridfunktionen, wie Starten des Verbrennungsmotors, elektromotorisches Anfahren, Rekuperieren und Boosten zur Verfügung stellt. Eine andere Möglichkeit besteht darin, eine Elektromaschine antriebstechnisch am Getriebeausgang anzuordnen. Dabei können die Getriebeübersetzungen allerdings nicht für einen elektromotorischen Antrieb genutzt werden. Weiterhin kann eine Elektromaschine auch innerhalb des Getriebes angeordnet und in den Antriebsstrang integriert sein.

Bei mehrgängigen Planetenkoppelgetrieben, die aus einem Planetengetriebe mit mehreren zusammenwirkenden Planetenradsätzen bestehen, sind zur Realisierung der Gangstufen des Getriebes in der Regel mehrere als Reibkupplungen und Reibbremsen ausgebildete Schaltelemente vorhanden, die das Planetengetriebe unter Last und zugkraftunterbrechungsfrei schalten können. Durch die rotierenden Bauteile dieser Reibschaltelemente werden allerdings nachteilig relativ hohe Schleppverluste verursacht. Oft wird für das Anfahren eine zusätzliche Anfahrkupplung oder ein Drehmomentwandler benötigt.

Aus der DE102006056753A1 ist ein Planetengetriebe mit den Merkmalen des Oberbegriffs des unabhängigen Anspruchs 1 für einen Hybridantrieb eines Kraftfahrzeugs bekannt, das drei gekoppelte Planetenradsätze und fünf mögliche Einbauorte für einen Elektromotor offenbart.

Aus der nicht vorveröffentlichten DE 10 2012 212 257 A1 der Anmelderin ist ein Planetengetriebe für einen Hybridantrieb eines Kraftfahrzeugs bekannt, bei dem das Planetengetriebe drei gekoppelte Planetenradsätze und mehrere Schaltelemente aufweist, bei welchem die Zugkraft des Antriebsstrangs beim Wechseln von verbrennungsmotorisch angetriebenen Gangstufen mit Hilfe einer Elektromaschine aufrechterhalten werden kann. Dieses Getriebe benötigt daher keine schleppverlustbehafteten Reibschaltelemente oder Synchronisierungen zur Zugkrafterhaltung bei Schaltvorgängen. Die Elektromaschine ist einer Getriebewelle oder Getriebekomponente innerhalb der Getriebestruktur antriebstechnisch zugeordnet. Bei einem ersten Planetenradsatz dieses Getriebes ist das Hohlrad mit einem gehäusefesten Bauteil verbindbar, der Planetenträger mit dem Hohlrad eines zweiten Planetenradsatzes antriebsverbunden, und das Sonnenrad mit dem gehäusefesten Bauteil verbunden. Bei dem zweiten Planetenradsatz ist der Planetenträger mit dem Hohlrad eines dritten Planetenradsatzes verbunden und das Sonnenrad mit einer Getriebeeingangswelle gekoppelt. Bei dem dritten Planetenradsatz ist der Planetenträger mit einer Getriebeausgangswelle verbunden und das Sonnenrad mit dem gehäusefesten Bauteil verbindbar sowie mit dem Hohlrad des ersten Planetenradsatzes verbunden. Die Schaltelemente dieser Getriebeanordnung können als einfache formschlüssige Schaltklauen ausgebildet sein, da die Elektromaschine als Lastschaltelement fungiert. Die Elektromaschine stellt zusätzlich die üblichen Hybridfunktionen einschließlich einer Anfahrfunktion zur Verfügung. Zur Realisierung von fünf Vorwärtsgangstufen weist diese Getriebeanordnung drei formschlüssige Schaltkupplungen und eine formschlüssige Schaltbremse auf. Der Verbrennungsmotor, die Elektromaschine und die Planetenradsätze befinden sich in einer koaxialen Anordnung, wobei zur Erzielung einer besonders kompakten Bauform die Planetenradsätze und die Schaltelemente zumindest teilweise in einen radial inneren Bauraum der Elektromaschine eingebaut sein können.

Aus der DE 10 2007 005 438 A1 ist ein Planetengetriebe mit mehreren Planetenradsätzen und mehreren Schaltelementen für einen Hybridantrieb eines Kraftfahrzeugs bekannt, bei dem eine Elektromaschine mit einem der Planetenradsätze in Wirkverbindung steht, um ein an dem Planetenradsatz anliegendes Drehmoment zur Realisierung einer Übersetzung abzustützen. Ein Verbrennungsmotor, ein Elektroantrieb mit zumindest einer im Getriebe verbauten Elektromaschine sowie die Planetenradsätze befinden sich in einer koaxialen Anordnung. Der Rotor der Elektromaschine ist mit dem Hohlrad des betreffenden Planetenradsatzes und der Stator mit einem gehäusefesten Bauteil verbunden. Das Hohlrad ist über ein formschlüssiges Schaltelement mit dem gehäusefesten Bauteil verbindbar. Die Schaltelemente sind als Reibkupplungen und Reibbremsen oder als Klauenkupplungen und Klauenbremsen ausgebildet, die mittels einer zugeordneten Aktuatorik beispielsweise elektromotorisch betätigbar sind. Bei einer entsprechenden Ansteuerung der Aktuatoren der betreffenden Schaltelemente sind mit Hilfe der Elektromaschine zugkraftunterbrechungsfreie Schaltungen durchführbar, wobei die Synchronisierung der jeweiligen Schaltelemente durch die Elektromaschine erfolgt. Die Elektromaschine ersetzt bei einem Schaltvorgang die Funktion eines reibschlüssigen Lastschaltelements, wobei ihr Drehmoment auf eine mit dem Abtrieb des Hybridantriebstrangs verbindbare Getriebeausgangswelle geführt wird. Bekannte Hybridfunktionen, wie elektrisches Anfahren, Rekuperieren und Boosten sind bei diesem Antriebsstrang ebenfalls möglich. Mit drei Planetenradsätzen und vier Schaltelementen, von denen zwei als Schaltkupplungen und zwei als Schaltbremsen ausgebildet sind, sind bei diesem Getriebe insgesamt sechs Vorwärtsgangstufen und eine Rückwärtsgangstufe nutzbar.

Vor diesem Hintergrund liegt der Erfindung die Aufgabe zugrunde, ein Planetengetriebe mit gekoppelten Planetenradsätzen für einen Hybridantrieb eines Kraftfahrzeugs zu schaffen, das zumindest überwiegend zugkraftunterbrechungsfrei schaltbar ist und dennoch eine kompakte Bauform aufweist sowie kostengünstig in der Herstellung und effizient im Betrieb ist.

Die Lösung dieser Aufgabe ergibt sich aus den Merkmalen der unabhängigen Ansprüche 1, 2 oder 3, während vorteilhafte Ausgestaltungen und Weiterbildungen der Erfindung den Unteransprüchen entnehmbar sind.

Der Erfindung liegt die Erkenntnis zugrunde, dass bei einem Hybridantrieb mit einem Planetenkoppelgetriebe eine Elektromaschine derart in das Getriebe integriert und angesteuert werden kann, dass die bei einem verbrennungsmotorisch angetriebenem Schaltvorgang zu betätigenden Schaltkupplungen oder Schaltbremsen lastfrei ohne Unterbrechung der Zugkraft im Antriebsstrang ein- bzw. ausgelegt werden können, so dass ein Verzicht auf Reibschaltelemente oder Synchronisierungen möglich ist. Mit drei gekoppelten Planetenradsätzen, deren Elemente über permanente oder schaltbare Verbindungen in geeigneter Weise mit einer derart implementierten Elektromaschine und einem Verbrennungsmotor sowie untereinander zusammenwirken, ist es möglich, die Leistungen und Funktionen eines herkömmlichen, zumindest sechsgängigen Hybridantriebsstrangs mit einem geringeren Aufwand an Kosten und Bauraum zu erreichen. Soweit die Anbindung der gekoppelten Planetenradsätze erhalten bleibt, sind auch Anordnungen möglich, bei denen die Elektromaschine zwar nicht räumlich in das Getriebe integriert ist, jedoch funktional mit diesem auf die gleiche Weise verbunden ist. Dadurch kann eine Getriebeanordnung ermöglicht werden, die relativ einfach an vorhandene Bauraumverhältnisse anpassbar ist.

Demnach betrifft die Erfindung ein Planetengetriebe für einen Hybridantrieb eines Kraftfahrzeugs, mit einem Verbrennungsmotor und einer Elektromaschine, aufweisend drei gekoppelte Planetenradsätze, jeweils mit einem Hohlrad, einem Sonnenrad und einem mehrere Planeten führenden Planetenträger, und mit mehreren Schaltelementen zur Realisierung von mehreren verbrennungsmotorisch und/oder elektromotorisch antreibbaren Gangstufen.

Zur Lösung der gestellten Aufgabe sieht die Erfindung vor, dass bei einem ersten Planetenradsatz eines der beiden Elemente Hohlrad oder Planetenträger mit einem gehäusefesten Bauteil verbindbar sowie mit einem Rotor der Elektromaschine verbindbar oder antriebsverbindbar ist, dass das andere der beiden Elemente Hohlrad oder Planetenträger des ersten Planetenradsatz mit einem der beiden Elemente Hohlrad oder Planetenträger eines dritten Planetenradsatzes verbunden ist, dass das Sonnenrad des ersten Planetenradsatz mit einer Getriebeeingangswelle verbunden sowie mit einem der beiden Elemente Hohlrad oder Planetenträger des dritten Planetenradsatzes verbindbar ist, und zwei der Elemente Hohlrad, Planetenträger, Sonnenrad des ersten Planetenradsatz miteinander verbindbar sind, dass bei einem zweiten Planetenradsatz eines der beiden Elemente Hohlrad oder Planetenträger mit einem der beiden Elemente Hohlrad oder Planetenträger des dritten Planetenradsatzes verbunden oder antriebsverbunden ist, dass das andere der beiden Elemente Hohlrad oder Planetenträger des zweiten Planetenradsatzes mit einem Getriebeabtrieb antriebsverbunden ist, dass das Sonnenrad des zweiten Planetenradsatzes mit dem Rotor der Elektromaschine verbunden ist, dass zwei der Elemente Hohlrad, Planetenträger, Sonnenrad des zweiten Planetenradsatzes miteinander verbindbar sind, und dass bei dem dritten Planetenradsatz dessen Sonnenrad mit dem gehäusefesten Bauteil verbunden oder verbindbar ist.

Bei den gewählten Definitionen wird unter dem Begriff Verbindung eine direkte oder indirekte drehfeste Verbindung verstanden. Unter dem Begriff Antriebsverbindung wird eine kraftschlüssige Verbindung durch Übertragungsmittel, wie Stirnradpaare oder dergleichen verstanden.

Durch die beschriebene Anordnung ist ein Planetengetriebe für einen Hybridantrieb geschaffen, bei dem die Elektromaschine während allen Schaltungen des Getriebes, bei denen der Verbrennungsmotor als Antriebaggregat dient, die Zugkraft erhalten kann. Das Getriebe benötigt keine Reibschaltelemente oder Synchronisierungen. Alle Schaltelemente können als kostengünstige Schaltklauen ausgebildet sein. Die Getriebestruktur ist somit mit einem relativ geringen Kosten- und Bauaufwand realisierbar.

Die Betriebsdrehzahlen und Schaltmomente der einzelnen Komponenten sind bei diesem Planetengetriebe vergleichsweise niedrig. Zudem ist der Verzahnungswirkungsgrad hoch und die Schleppmomente sind gering. Dadurch erreicht dieses Planetengetriebe einen hohen Wirkungsgrad.

Grundsätzlich können einzelne oder mehrere der Planetenradsätze sowohl als Minusgetriebe, also mit negativer Standübersetzung, welche durch das Übersetzungsverhältnis zweier Radsatzelemente bei festgehaltenem Planetenträger gegeben ist, als auch als Plusgetriebe, also mit positiver Standübersetzung, realisiert sein. Bei der Umwandlung zwischen den Bauweisen Minusgetriebe und Plusgetriebe muss lediglich die Kopplung der Planetenradsätze nach der Erfindung möglich sein, wobei jeweils die Anbindung des Planetenträgers und des Hohlrads getauscht werden sowie die Standübersetzung des jeweiligen Planetenradsatzes um den Wert 1 erhöht oder verringert wird.

Bevorzugt sind die Planentenradsätze als Minusradsätze ausgebildet, bei denen die Standübersetzung bei festgehaltenem Planetenträger aufgrund der gängigen Vorzeichenkonvention für das Hohlrad negativ ist. Gegenüber einem Plusgetriebe ist die Bauweise der Minusgetriebe häufig konstruktiv einfacher und kann einen besseren Wirkungsgrad aufweisen.

Bei einer Ausführung als Minusgetriebe kann vorgesehen sein, dass bei einem ersten Planetenradsatz das Hohlrad mit einem gehäusefesten Bauteil verbindbar sowie mit einem Rotor der Elektromaschine verbindbar oder antriebsverbindbar ist, der Planetenträger mit dem Hohlrad eines dritten Planetenradsatzes verbunden ist, das Sonnenrad mit einer Getriebeeingangswelle bzw. mit der Antriebswelle des Verbrennungsmotors verbunden sowie mit dem Planetenträger des dritten Planetenradsatzes verbindbar ist, und zwei der Elemente Hohlrad, Planetenträger, Sonnenrad des ersten Planetenradsatzes miteinander verbindbar sind, dass bei einem zweiten Planetenradsatz das Hohlrad mit dem Planetenträger des dritten Planetenradsatzes verbunden oder antriebsverbunden ist, der Planetenträger mit einem Getriebeabtrieb antriebsverbunden ist, das Sonnenrad mit dem Rotor der Elektromaschine verbunden ist, und zwei der Elemente Hohlrad, Planetenträger, Sonnenrad des zweiten Planetenradsatzes miteinander verbindbar sind, und dass bei dem dritten Planetenradsatz das Sonnenrad mit dem gehäusefesten Bauteil verbunden oder verbindbar ist.

Die Anordnung der Getriebeelemente gemäß der Erfindung ermöglicht ein Schaltschema mit einer progressiven Gangstufung, wobei die Standübersetzungen weitgehend frei wählbar sind. Bei einer solchen Gangstufung, bei der die aufeinanderfolgenden Stufensprünge im Gegensatz zu einer geometrischen Gangstufung mit tendenziell kleiner werdenden Sprüngen variieren, wodurch die Differenz der Höchstgeschwindigkeiten zwischen den Gängen annähernd konstant ist, werden vergleichsweise weniger Gangstufen benötigt, um eine bestimmte Gesamtspreizung des Getriebes zu realisieren.

Der Verbrennungsmotor, die Elektromaschine sowie die drei Planetenradsätze können eine koaxiale Anordnung bilden. Dabei ist die Anordnungsreihenfolge der einzelnen Planetenradsätze, Stirnradstufen und Schaltelemente sowie des An- und Abtriebs grundsätzlich frei wählbar, soweit die festen und schaltbaren Verbindungen bzw. Antriebsverbindungen gemäß der Lehre der Erfindung erhalten bleiben. Dadurch ist die Getriebeanordnung relativ einfach an Bauraumvorgaben anpassbar. Die Elektromaschine kann bei dieser Anordnung in das Getriebe integriert und vollständig innerhalb eines Getriebegehäuses angeordnet sein, wodurch eine besonders kompakte Bauform entsteht.

Es ist jedoch auch möglich, dass der Verbrennungsmotor und die Elektromaschine achsparallel angeordnet sind, wobei der erste Planetenradsatz und der dritte Planetenradsatz koaxial zu dem Verbrennungsmotor angeordnet sind und der zweite Planetenradsatz koaxial zur Elektromaschine angeordnet ist, wobei die Antriebsverbindung zwischen einem der beiden Elemente Hohlrad oder Planetenträger des ersten Planetenradsatzes und der Elektromaschine über eine oder mehrere Stirnradstufen realisiert ist. Dadurch wird eine axial besonders kurz bauende Getriebeanordnung realisiert. Die Elektromaschine kann bei dieser Anordnung beispielsweise dem ihr zugeordneten Planetenradsatz vorgelagert sein.

Die Antriebsverbindung zwischen dem zweiten Planetenradsatz und dem Getriebeabtrieb kann bei beiden Ausführungsformen, je nach verfügbarem Bauraum und gewünschter Übersetzung, über eine oder mehrere Stirnradstufen realisiert sein. Beispielsweise kann bei der koaxialen Anordnung aller drei Planetenradsätze und der beiden Antriebsaggregate eine zweistufige Übersetzung durch zwei gekoppelte Stirnradpaare für eine Kraftübertragung zu einem Differenzialgetriebe vorgesehen sein. Bei der achsparallelen Anordnung von Verbrennungsmotor und Elektromaschine kann beispielsweise eine einfache Stirnradstufe zum Differenzialgetriebe ausreichend sein. Als eine Alternative zu Stirnradstufen sind auch Kettentriebe oder andere Zugmitteltriebe für die Kraftübertragung geeignet.

Zudem kann auf jeder der Getriebewellen des Planetengetriebes ein Freilauf gegenüber einer anderen Welle oder einem Getriebegehäuse angeordnet werden, soweit dies für die Funktion des Getriebes zweckmäßig ist.

Weiterhin stehen die gängigen Hybridfunktionen von Parallelhybridantrieben, wie Rekuperieren und Boosten zur Verfügung. Mit Hilfe der Elektromaschine kann bei der vorgeschlagenen Getriebestruktur insbesondere ein Anfahrvorgang durchgeführt werden, bei dem keine zusätzliche Anfahrkupplung oder ein Drehmomentwandler benötigt wird, welches sich zusätzlich kostengünstig und Bauraum sparend auswirkt.

Gemäß einer bevorzugten Ausführungsform der Erfindung ermöglicht die beschriebene Anordnung mit drei Planetenradsätzen mindestens sechs zugkraftunterbrechungsfrei schaltende Vorwärtsgangstufen, die über fünf unsynchronisierte Schaltelemente schaltbar sind, wobei vier der Schaltelemente als formschlüssige Schaltkupplungen und eines der Schaltelemente als eine formschlüssige Schaltbremse ausgebildet sind.

Der erste und der zweite Planetenradsatz können durch Schließen eines oder mehrerer der Schaltelemente in sich verblockt werden, um zur Realisierung einer bestimmten Schaltabfolge und einer bestimmten Gangstufung mit einer Direktübersetzung zu rotieren. Diese Verblockung kann durch verschiedene Kopplungen von Radsatzelementen miteinander realisiert sein. Dazu kann vorgesehen sein, dass bei dem ersten Planetenradsatz und/oder bei dem zweiten Planetenradsatz der zugehörige Planetenträger mit dem zugehörigen Sonnenrad verbindbar ist. Durch eine alternative Anordnung des/der betreffenden Schaltelemente kann bei dem ersten Planetenradsatz und/oder bei dem zweiten Planetenradsatz das zugehörige Hohlrad mit dem zugehörigen Sonnenrad verbindbar sein. Durch eine andere alternative Anordnung des/der betreffenden Schaltelemente kann bei dem ersten Planetenradsatz und/oder bei dem zweiten Planetenradsatz das zugehörige Hohlrad mit dem zugehörigen Planetenträger verbindbar sein.

Weiterhin ermöglicht die vorgestellte Getriebeanordnung mindestens zwei elektromotorisch antreibbare Gangstufen, wobei eine der elektromotorisch antreibbaren Gangstufen eine besonders kurze, also ins Langsame übertragene Übersetzung aufweisen kann, und die andere der beiden elektromotorisch antreibbaren Gangstufen als ein Direktgang ausgebildet sein kann. Die Gangstufe mit der kurzen Übersetzung kann auch als elektromotorisch antreibbarer Rückwärtsgang genutzt werden.

Ein Wechsel aus der elektromotorisch angetriebenen kurzen Gangstufe ist allerdings ohne weitere Maßnahmen mit einer Zugkraftunterbrechung verbunden. Um dennoch eine zugkrafterhaltende Zughoch- oder Zugrückschaltung aus dieser Gangstufe heraus zu ermöglichen, kann ein Schaltelement als ein Reibschaltelement ausgebildet sein, das die betreffenden formschlüssigen Schaltelemente entlastet, so dass diese lastfrei geschaltet werden können, ohne die Zugkraft im Antriebsstrang zu unterbrechen. Dies kann bei einem bevorzugten Schaltschema des Getriebes dadurch konkretisiert sein, indem dasjenige Schaltelement, welches zur Herstellung einer Verbindung zwischen zwei der Elemente Hohlrad, Planetenträger oder Sonnenrad des zweiten Planetenradsatzes, also zu Verblockung des zweiten Planetenradsatzes, vorhanden ist, als ein Reibschaltelement ausgebildet ist, um zusätzlich als ein Lastschalt- oder Anfahrelement zu fungieren.

Weiterhin kann vorgesehen sein, dass das Planetengetriebe in eine Schaltstellung zum Laden eines elektrischen Energiespeichers mittels der Elektromaschine bei stehendem oder rollendem Fahrzeug bringbar ist. Beim Fahrzeugstillstand kann dazu der Getriebeabtrieb über eine zusätzliche Bremse oder eine meist ohnehin vorhandene Feststellbremse festgesetzt und der Verbrennungsmotor mit der Elektromaschine gekoppelt werden, wobei die Elektromaschine als Generator betrieben wird, beispielsweise um die angeschlossene Fahrzeugbatterie des Fahrzeugbordnetzes aufzuladen.

Bei rollendem Fahrzeug ist diese Funktion ebenfalls realisierbar, indem das eigentlich ständig mit dem Gehäuse verbundene Sonnenrad des dritten Radsatzes über ein zusätzliches Schaltelement lösbar mit dem Getriebegehäuse verbunden wird. Durch Lösen des Sonnenrades des dritten Radsatzes vom Getriebegehäuse kann dieses frei drehen, so dass das Fahrzeug antriebslos rollen kann, während der Verbrennungsmotor mit der Elektromaschine gekoppelt ist und diese im generatorischen Betrieb antreibt.

Sollte für die bereits erwähnte Lastschaltung aus dem kurzen elektromotorisch antreibbaren Gang ohnehin das zur Verblockung des zweiten Planetenradsatzes vorhandene Schaltelement als Reibelement ausgebildet sein, so kann mit Hilfe diesen Reibschaltelements über eine Schlupfansteuerung unmittelbar aus dem Laden im Stillstand oder im Rollen in den angetriebenen Fahrbetrieb gewechselt werden.

Zur Verdeutlichung der Erfindung ist der Beschreibung eine Zeichnung eines Ausführungsbeispiels beigefügt. In dieser zeigt
Fig. 1 ein Getriebeschema eines Planetengetriebes mit drei Planetenradsätzen, das mit einem Verbrennungsmotor und einer Elektromaschine zusammenwirkt,
Fig. 2a eine Übersetzungstabelle mit Standübersetzungen der Planetenradsätze des Getriebes gemäß Fig. 1,
Fig. 2b eine Schaltabelle für das Getriebe gemäß Fig. 1,
Fig. 3 das Getriebeschema der Fig. 1 mit einer dazu alternativen Schaltelementanordnung zur Verblockung eines ersten Planetenradsatzes,
Fig. 4 das Getriebeschema der Fig. 1 mit einer anderen dazu alternativen Schaltelementanordnung zur Verblockung des ersten Planetenradsatzes,
Fig. 5 das Getriebeschema der Fig. 1 mit einer dazu alternativen Schaltelementanordnung zur Verblockung eines zweiten Planetenradsatzes,
Fig. 6 das Getriebeschema der Fig. 1 mit einer anderen dazu alternativen Schaltelementanordnung zur Verblockung des zweiten Planetenradsatzes,
Fig. 7 eine zweite Ausführungsform eines Getriebeschemas eines Planetengetriebes mit drei Planetenradsätzen, das mit einem Verbrennungsmotor und einer Elektromaschine zusammenwirkt,
Fig. 8 das Getriebeschema der Fig. 7 mit einer dazu alternativen Schaltelementanordnung zur Verblockung eines ersten Planetenradsatzes,
Fig. 9 das Getriebeschema der Fig. 7 mit einer anderen dazu alternativen Schaltelementanordnung zur Verblockung des ersten Planetenradsatzes,
Fig. 10 das Getriebeschema der Fig. 7 mit einer dazu alternativen Schaltelementanordnung zur Verblockung eines zweiten Planetenradsatzes,
Fig. 11 das Getriebeschema der Fig. 7 mit einer anderen dazu alternativen Schaltelementanordnung zur Verblockung des zweiten Planetenradsatzes, und
Fig. 12 das Getriebeschema der Fig. 7 mit einer dazu alternativen Schaltelementanordnung an einem Stirnradpaar.

Zur Vereinfachung sind in den Figuren funktions- oder wirkungsgleiche Bauteile mit Ausnahme von Schaltkupplungen, welche in alternativen Schaltelementanordnungen einer Getriebeanordnung unterschiedlich angeordnet sind, mit gleichen Bezugszeichen versehen.

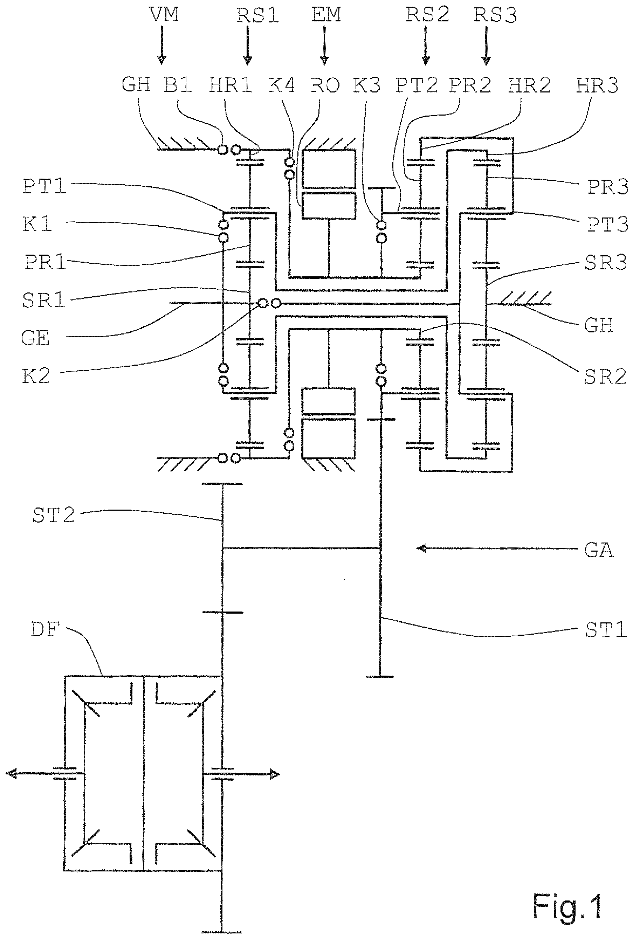

Demnach ist in Fig. 1 ein Planetengetriebe eines Hybridantriebsstrangs eines Kraftfahrzeugs dargestellt, das drei einfache Planetenradsätze RS1, RS2, RS3 in Minusgetriebebauweise aufweist. Die drei Planetenradsätze RS1, RS2, RS3, in Kurzform auch als Radsätze bezeichnet, bestehen jeweils aus einem Hohlrad HR1, HR2, HR3, einem Sonnenrad SR1, SR2, SR3 und einem Planetenträger PT1, PT2, PT3, welcher jeweils mehrere Planetenräder PR1, PR2, PR3, in Kurzform auch als Planeten bezeichnet, führt.

Das Planetengetriebe ist von einem ihm vorgelagerten, nicht explizit dargestellten Verbrennungsmotor VM sowie von einer in die Getriebeanordnung integrierte Elektromaschine EM betreibbar. Die drei Planetenradsätze RS1, RS2, RS3, der Verbrennungsmotor VM und die Elektromaschine EM befinden sich in einer koaxialen Anordnung, wobei die Elektromaschine EM axial zwischen dem ersten Planetenradsatz RS1 und dem zweiten Planetenradsatz RS2 positioniert ist. Die Kraftübertragung zu einem Differenzialgetriebe DF erfolgt im Getriebeabtrieb GA über eine zweistufige Übersetzung mit zugeordneten Stirnradpaaren ST1 und ST2, die auf einer gemeinsamen Welle angeordnet sind.

Zur Realisierung von sechs verbrennungsmotorisch antreibbaren Vorwärtsgangstufen M1 bis M6 sowie zwei elektromotorisch antreibbaren Vorwärtsgangstufen E1, E2 sind fünf unsynchronisierte, als Schaltklauen ausgebildete Schaltelemente B1, K1, K2, K3, K4 angeordnet, wobei eines der Schaltelemente als eine Schaltbremse B1 und die übrigen Schaltelemente als Schaltkupplungen K1, K2, K3, K4 ausgebildet sind. Eine oder mehrere Rückwärtsgangstufen sind bei diesem Getriebe ebenfalls realisierbar, hier aber nicht näher erläutert.

Zur weiteren Vereinfachung werden die verbrennungsmotorisch antreibbaren Vorwärtsgangstufen abkürzend auch einfach als mechanische Gänge M1, M2, M3, M4, M5, M6 und die elektromotorisch antreibbaren Vorwärtsgangstufen als elektrische Gänge E1, E2 bezeichnet.

Die verschiedenen Verbindungen der einzelnen Elemente der Radsätze des Planetengetriebes sind, soweit zweckmäßig, über nicht weiter bezeichnete, aus der Fig. 1 aber ersichtliche Wellenabschnitte realisiert. Demnach stellt sich das Planetenkoppelgetriebe im Einzelnen wie folgt dar:

Bei dem ersten Planetenradsatz RS1 ist das Hohlrad HR1 mittels einer Bremse B1 mit einem gehäusefesten Bauteil GH sowie mittels einer vierten Kupplung K4 mit einem Rotor RO der Elektromaschine EM verbindbar. Der Planetenträger PT1 ist mit dem Hohlrad HR3 eines dritten Planetenradsatzes RS 3 verbunden. Das Sonnenrad SR1 ist mit einer Antriebswelle des Verbrennungsmotors VM bzw. mit einer Getriebeeingangswelle GE verbunden sowie mit dem Planetenträger PT3 des dritten Planetenradsatzes RS3 mittels einer zweiten Kupplung K2 verbindbar. Um den Radsatz RS1 zu verblocken, ist sein Planetenträger PT1 mit seinem Sonnenrad SR1 mittels einer ersten Kupplung K1 koppelbar.

Bei einem zweiten Planetenradsatz RS2 ist das Hohlrad HR2 mit dem Planetenträger PT3 des dritten Planetenradsatzes RS3 verbunden. Das Sonnenrad SR2 ist mit dem Rotor RO der Elektromaschine EM verbunden und der Planetenträger PT2 ist mit einer ersten Stirnradstufe ST1 des Getriebeabtriebs GA antriebsverbunden.

Der Getriebeabtrieb GA umfasst wie angedeutet ein erstes Stirnradpaar ST1 und ein zweites Stirnradpaar ST2, wobei das Antriebsrad des zweiten Stirnradpaares ST2 mit dem Abtriebsrad des ersten Stirnradpaares ST1 über eine Wellenverbindung drehfest verbunden ist. Das Abtriebsrad des zweiten Stirnradpaares ST2 kämmt mit dem Differenzialgetriebe DF, über welches eine Fahrzeugachse mit Fahrzeugrädern antreibbar ist. Um den zweiten Planetenradsatz RS2 zu verblocken, ist sein Planetenträger PT2 mit seinem Sonnenrad SR2 mittels einer dritten Kupplung K3 koppelbar. Bei dem dritten Planetenradsatz RS3 ist das Sonnenrad SR 3 mit dem gehäusefesten Bauteil GH verbunden.

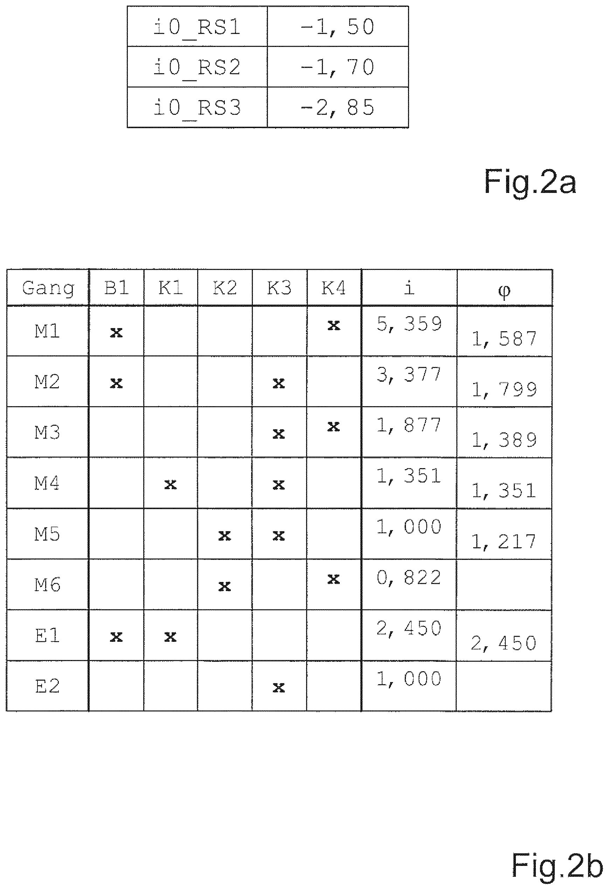

Fig. 2a zeigt ein Beispiel für die möglichen Standübersetzungen i_0 der drei Radsätze RS1, RS2, RS3. Nach der Vorzeichenkonvention für Minusgetriebe sind die Standübersetzungen der als Minusgetriebe ausgebildeten Radsätze RS1, RS2, RS3 mit einem negativen Vorzeichen versehen. Demnach weist der erste Radsatz RS1 eine Standübersetzung von -1,50, der zweite Radsatz RS2 eine Standübersetzung von -1,70 und der dritte Radsatz RS3 eine Standübersetzung von -2,85 auf, also eine wesentlich größere Standübersetzung als die der beiden anderen Radsätze RS1, RS2.

Fig. 2b zeigt ein dazugehöriges beispielhaftes Schaltschema des Planetengetriebes der Fig. 1. Daraus ist ersichtlich, dass bei den sechs mechanischen Vorwärtsgangstufen M1, M2, M3, M4, M5, M6 jeweils zwei der Schaltelemente B1, K1, K2; K3, K4 geschlossen sind. Die daraus sich ergebenden Übersetzungen i der Gänge und die zugehörigen Stufensprünge ϕ sind ebenfalls aus der Tabelle entnehmbar. Demnach ist der fünfte Gang M5 als ein Direktgang und der sechste Gang M6 als ein Schnellgang ausgelegt. Die Stufensprünge ϕ ergeben eine im Wesentlichen progressive Getriebestufung, also eine Stufung mit zunehmend kleiner werdenden Sprüngen in Richtung von den kleineren zu den größeren Gängen. Die sechs mechanischen Gänge M1 bis M6 sind dabei mit Hilfe der Elektromaschine EM zugkraftunterbrechungsfrei schaltbar.

Weiterhin stehen ein erster, kurz übersetzter, also stark ins Langsame übersetzter, elektrischer Gang E1 und ein zweiter, direkt übersetzter elektrischer Gang E2 zur Verfügung. Der elektrisch antreibbare Gang E1 kann bei einer Drehrichtungsumkehr der Elektromaschine EM auch als Rückwärtsgang genutzt werden.

Die Funktionsweise des Planetengetriebes der Fig. 1 wird nachfolgend beschrieben:
Bei einem elektromotorisch angetriebenen Anfahrvorgang ist die Schaltbremse B1 und dadurch das Hohlrad HR1 des verbrennungsmotorseitigen ersten Planetenradsatzes RS1 am Gehäuse GH festgestellt. Die Elektromaschine EM treibt das Sonnenrad SR2 des zweiten Planetenradsatzes RS2 an und die dritte Schaltkupplung K3 ist offen. Da die erste Schaltkupplung K1 geschlossen ist, ist der erste Planetenradsatz RS1 insgesamt am Gehäuse GH festgelegt. Dadurch steht auch dessen Planetenträger PT1 sowie das Hohlrad HR3 des dritten Planetenradsatzes RS3 still. Da auch das Sonnenrad SR3 des dritten Planetenradsatzes RS3 am Gehäuse GH festgelegt ist, steht auch dieser dritte Planetenradsatz RS3 mit seinem Planetenträger PT3 in dieser Betriebsweise still. Dadurch können sich die von dem Sonnenrad SR2 angetriebenen Planetenräder PR2 des zweiten Planetenradsatzes RS2 an dem mit dem Planetenträger PT3 des dritten Planetenradsatzes RS3 verbundenen Hohlrad HR2 des zweiten Planetenradsatzes RS2 abstützen und über den mit dem eingangsseitigen Zahnrad des ersten Stirnradpaares ST1 verbundenen Planetenträger PT2 des zweiten Planetenradsatzes RS2 den Abtrieb GA antreiben. Die Elektromaschine EM wirkt hierbei als ein elektrodynamisches Anfahrelement (EDA).

Aus dem elektromotorisch angetriebenen Anfahren ist ein Wechsel in den ersten oder zweiten mechanisch angetriebenen Gang M1, M2 möglich. Dabei bleibt die Schaltbremse B1 geschlossen, die erste Schaltkupplung K1 ist geöffnet und die vierte oder die dritte Schaltkupplung K4, K3 wird geschlossen. Die Zugkraft kann bei diesem Gangwechsel aufrechterhalten werden, da das betreffende Schaltelement K4, K3 bei einer entsprechenden Drehzahl der Elektromaschine EM synchron wird und lastfrei geschlossen werden kann.

Die mechanischen Gänge M1 bis M6 können zugkraftunterbrechungsfrei geschaltet werden, wobei die Elektromaschine EM den jeweiligen Gangwechsel durch ein entsprechendes Drehmoment im Antriebsstrang bzw. am Getriebeabtrieb GA abstützt, so dass die jeweils zu betätigenden Schaltelemente B1, K1, K2, K3, K4 lastfrei ausgelegt bzw. eingelegt werden können. Dabei wird am Verbrennungsmotor VM durch eine geeignete Ansteuerung die Motordrehzahl jeweils an die neue Gangstufe angepasst.

In einem fünften mechanischen Gang M5 wird durch Schließen des zweiten Schaltelements K2 eine Direktverbindung zwischen der Antriebswelle GE des Verbrennungsmotors VM und dem Planetenträger PT3 des dritten Planetenradsatzes RS3 hergestellt. Da gleichzeitig der zweite Planetenradsatz RS2 durch ein geschlossenes drittes Schaltelement K3 verblockt ist und das Sonnenrad SR3 des dritten Planetenradsatzes RS3 mit dem Gehäuse GH fest verbunden ist, entsteht eine verbrennungsmotorisch angetriebene Direktübersetzung zum Abtrieb GA. Der höchste Gang M6 ist als ein Schnellgang ausgelegt. Wie dem Schaltschema gemäß Fig. 2b sowie der Fig. 1 entnehmbar ist, wird der Rotor der Elektromaschine EM in den mechanischen Gängen M2 bis M5 angetrieben. Dies kann dazu genutzt werden, um im Fahrbetrieb bei einem der Gänge M2 bis M5 die Elektromaschine EM anzutreiben, so dass diese im generatorischen Betrieb Strom ins Fahrzeugbordnetz einspeisen kann.

Um den ersten elektrischen Gang E1 zu schalten, werden die Schaltbremse B1 sowie die erste Schaltkupplung K1 geschlossen, also der erste Planetenradsatz RS1 und gleichzeitig der dritte Planetenradsatz RS3 am Gehäuse festgestellt. Dadurch ergibt sich die relativ große Übersetzung dieses ersten elektrischen Gangs E1. Wenn alle Schaltelemente ausschließlich als formschlüssige Kupplungen und Bremsen ausgebildet sind, ist der erste elektromotorisch angetriebene Gang zugkraftunterbrechend schaltbar. Wenn jedoch die dritte Schaltkupplung K3, also die Schaltkupplung zur Verblockung des zweiten Planetenradsatzes RS2, als ein Reibschaltelement ausgebildet ist, dann kann aus dem ersten elektrischen Gang E1 heraus eine zugkrafterhaltende Lastschaltung für eine Zughochschaltung oder eine Zugrückschaltung durchgeführt werden. Dabei werden die zu schaltenden Klauenschaltelemente durch eine Ansteuerung des Reibschaltelements K3 in Schließrichtung entlastet und können lastfrei geöffnet werden.

Während einer solchen Zughochschaltung ist es möglich, nur die Schaltbremse B1 zu öffnen und die erste Schaltkupplung K1 geschlossen zu halten. Dies führt dann bei Schließen der Reibkupplung K3 zu einer Zughochschaltung mit gleichzeitigem Motorstart in den vierten Gang M4 des verbrennungsmotorischen Antriebs. Das Drehmoment der Elektromaschine EM ist dabei entsprechend zu erhöhen, um das zusätzlich zu überwindende Schleppmoment des Verbrennungsmotors VM zu erzeugen. Die Elektromaschine EM überträgt in diesem Fall ihr Drehmoment zum einen über das Reibschaltelement K3 an den Abtrieb und zum anderen über das Hohlrad HR2 des zweiten Planetenradsatzes RS2 und die Planetenträger-Hohlrad-Übersetzung PT3/HR3 des dritten Planetenradsatzes RS3 auf die Antriebswelle GE des Verbrennungsmotors VM.

Für eine weitergehende Beschreibung zur Durchführung von Schaltvorgängen bei einem Automatgetriebe, welches sowohl reibschlüssige als auch formschlüssige Schaltelemente aufweist, sei an dieser Stelle auch auf die DE 102 44 023 A1 der Anmelderin verwiesen.

Um in den zweiten elektrischen Gang E2 zu schalten, wird nur die dritte Schaltkupplung K3 geschlossen, also der zweite Planetenradsatz RS2 verblockt. Alle übrigen Schaltelemente sind in dieser Gangstufe geöffnet. Dadurch ergibt sich eine elektromotorisch angetriebene Direktübersetzung zum Getriebeabtrieb GA. Da das Drehmoment der Elektromaschine EM in dieser Gangstufe direkt, also ohne Zwischenschaltung von Zahnrädern, zum Getriebeabtrieb GA übertragen wird, erfolgt die Kraftübertragung bis zur ersten Stirnradstufe ST1 ohne Verzahnungsverluste.

Aus einer elektromotorisch angetriebenen Fahrt in dieser Gangstufe E2 kann, bei zuvor gestartetem Verbrennungsmotor VM, in den verbrennungsmotorisch angetriebenen Fahrbetrieb gewechselt werden. Je nach aktueller Fahrgeschwindigkeit ist allein durch Schließen eines der Schaltelemente B1, K4, K1, K2 ein Wechsel in die betreffenden mechanischen Gänge M2, M3, M4 und M5 möglich.

Eine Ladefunktion zum Laden eines elektrischen Energiespeichers im Fahrzeugbordnetz bei Fahrzeugstillstand kann durch Schalten einer elektrodynamischen Anfahrfunktion realisiert werden. Dazu wird der Getriebeabtrieb GA festgestellt, beispielsweise mittels einer auch auf die Fahrzeugräder wirkenden Feststellbremse des Fahrzeugs. Außerdem wird das erste Schaltelement K1 geschlossen, wodurch der erste Planetenradsatz RS1 in sich verblockt ist und das Hohlrad HR3 des dritten Planetenradsatzes RS3 mit der Drehzahl des erste Planetenradsatzes RS1 bzw. der Getriebeeingangswelle GE umläuft. Dadurch, dass das Sonnenrad SR3 des dritten Planetenradsatzes RS3 gehäusefest stillsteht, treibt das Hohlrad HR3 des dritten Planetenradsatzes RS3 die Planetenräder PT3 des dritten Planetenradsatzes RS3 an, wodurch auch deren Planetenträger PT3 in Drehung versetzt wird. Weil der Planetenträger PT3 des dritten Planetenradsatzes RS3 drehfest mit dem Hohlrad HR2 des zweiten Planetenradsatzes RS2 verbunden ist, treibt dieses dem Hohlrad HR2 des zweiten Planetenradsatzes RS2 bei festgebremsten Planetenträger PT2 des zweiten Planetenradsatzes RS3 das Sonnenrad SR2 des zweiten Planetenradsatzes RS2 über dessen Planetenräder PL2 an. Dieses Sonnenrad SR2 ist mit dem Rotor der Elektromaschine EM verbunden, so dass auf dieser Weise die Elektromaschine EM auch bei stillstehendem Fahrzeug im generatorischen Betrieb arbeiten kann.

Bei dem Kraftfluss über den dritten Planetenradsatz RS3 im Fahrbetrieb fungiert das mit dem Gehäuse GH verbundene Sonnenrad SR3 des dritten Planetenradsatzes RS3 als ein abstützendes Element. Wenn dieses Sonnenrad SR3 durch ein nicht dargestelltes zusätzliches Schaltelement mit dem Gehäuse GH lösbar verbindbar ist, kann die elektrische Ladefunktion auch bei einem rollenden Fahrzeug durchgeführt werden. Dazu wird das Sonnenrad SR3 gelöst, so dass es frei drehen kann und der Verbrennungsmotor VM durch Schließen zweier Schaltelemente K1 und K4 mit der Elektromaschine EM antriebstechnisch gekoppelt. Bei geschlossenen ersten Schaltelement K1 ist der des erste Planetenradsatz RS1 in sich verblockt und durch das geschlossenen vierte Schaltelement K4 antriebswirksam mit dem Sonnenrad SR2 des zweiten Planetenradsatzes RS2 verbunden. Da bei einem frei mitdrehendem Sonnenrad SR4 des dritten Planetenradsatzes RS3 eine Drehmomentübertragung in diesem nicht abgestützt ist, dreht dieser dritte Planetenradsatz RS3 nur lose mit und der Antrieb des Rotors der Elektromaschine EM erfolgt über eine drehfeste Verbindung mit dem Sonnenrad SR2 des zweiten Planetenradsatzes RS2 bzw. über eine drehfeste Verbindung zwischen einer Sonnenradwelle und dem Rotor der Elektromaschine EM. Da in dieser Betriebssituation auch das dritte Schaltelement K3 geöffnet ist, kann die Elektromaschine EM bei einem stillstehenden und auch bei einem rollenden Fahrzeug durch den Verbrennungsmotor VM für einen generatorischen Betrieb angetrieben werden.

Aus dem Ladebetrieb ist direkt ein Anfahren oder Weiterfahren möglich, sofern die dritte Schaltkupplung K3 zur Verblockung des zweiten Planetenradsatzes RS2 als ein Reibschaltelement ausgebildet ist und entsprechend angesteuert wird.

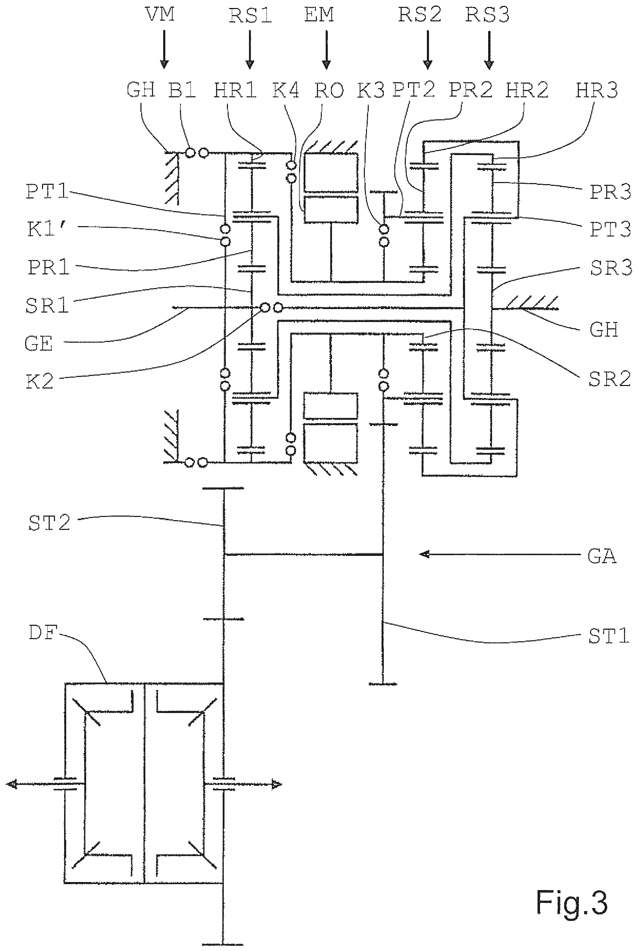

Die Figuren 3 bis 6 zeigen alternative Möglichkeiten zur wirkungsgleichen Verblockung der ersten und zweiten Planetenradsätze RS1, RS2 der Getriebeanordnung gemäß der Fig. 1.

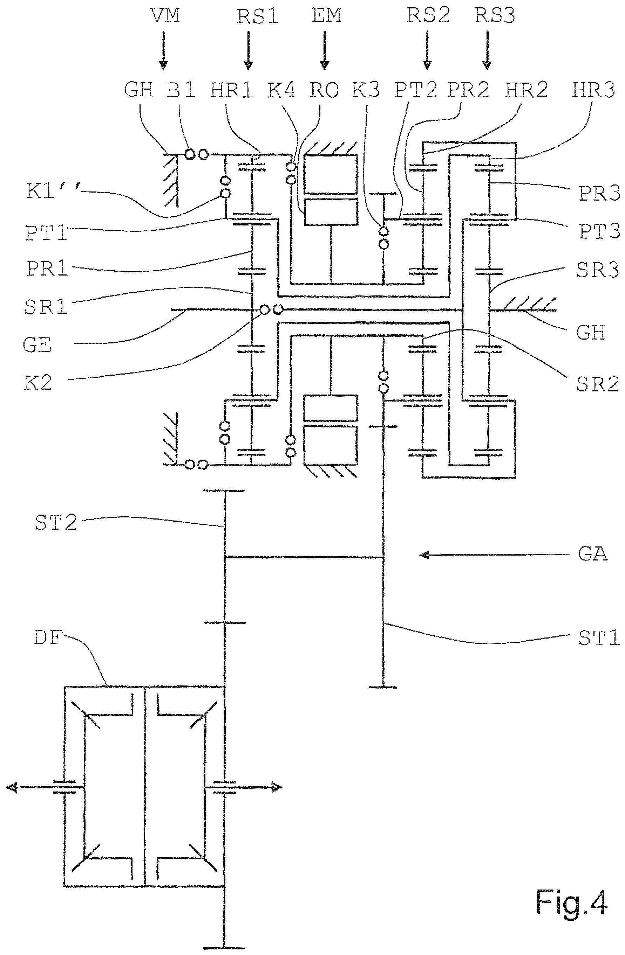

Der erste Planetenradsatz RS1 der Fig. 1 ist durch Schließen der Schaltkupplung K1 in sich verblockbar. Dadurch werden dessen Planetenträger PT1 und Sonnenrad SR1 miteinander drehfest gekoppelt, so dass alle Planetenradsatzbauteile bei einem Antrieb mit der gleichen Drehzahl rotieren. Bei dem Ausführungsbeispiel gemäß Fig. 3 ist die Schaltkupplung K1 des ersten Planetenradsatz RS1 gemäß Fig. 1 durch eine Schaltkupplung K1' ersetzt. Dadurch ist bei dem ersten Planetenradsatz RS1 das Hohlrad HR1 mit dem Sonnenrad SR1 koppelbar und der erste Planetenradsatz RS1 auf diese Weise in sich verblockbar. Fig. 4 zeigt als eine weitere Alternative dazu, bei der in dem ersten Planetenradsatz RS1 eine Schaltkupplung K1" für eine Kopplung des Hohlrades HR1 mit dem Planetenträger PT1 vorhanden ist, durch deren Schließen der erste Planetenradsatz RS1 in sich verblockbar ist.

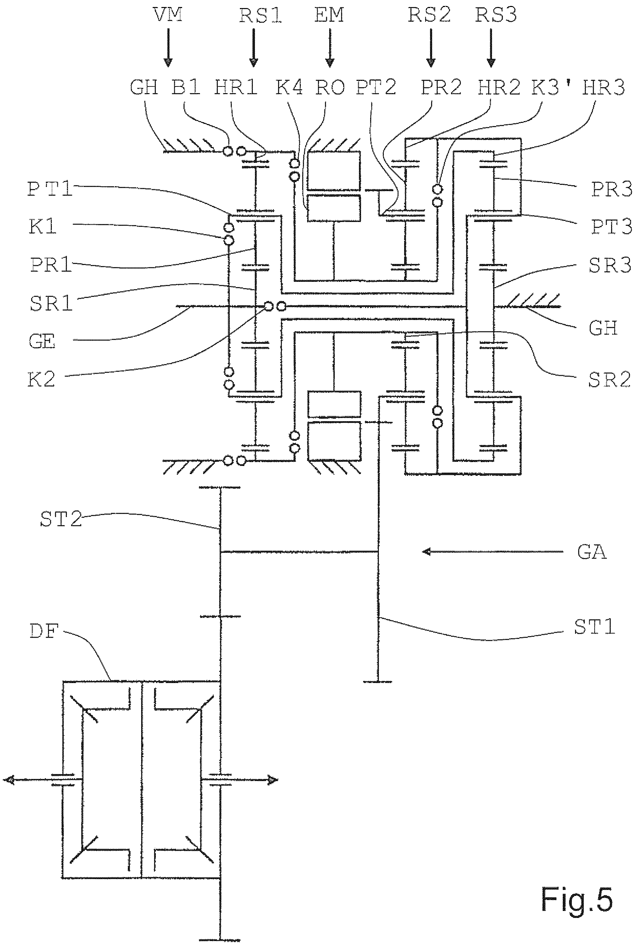

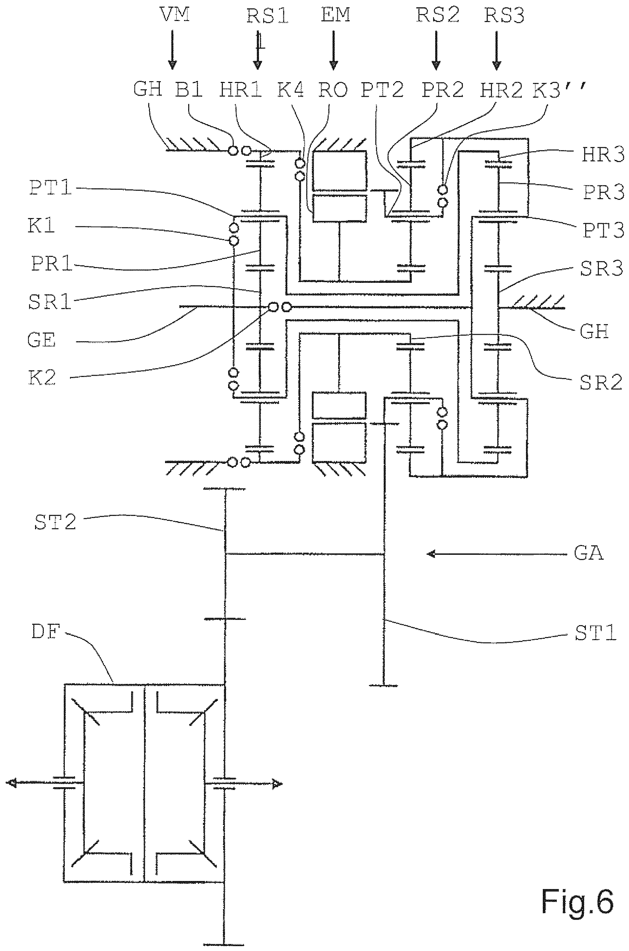

Der zweite Planetenradsatz RS2 der Fig. 1 ist durch Schließen der Schaltkupplung K3 in sich verblockbar. Dazu werden dessen Planetenträger PT2 und Sonnenrad SR2 drehfest miteinander gekoppelt. In Fig. 5 ist die Schaltkupplung K3 des zweiten Planetenradsatz RS2 gemäß Fig. 1 durch eine Schaltkupplung K3' ersetzt. Dadurch ist bei dem zweiten Radsatz RS2 dessen Hohlrad HR2 mit dessen Sonnenrad SR2 koppelbar. Fig. 6 zeigt als eine weitere Alternative eine Schaltkupplung K3" des zweiten Planetenradsatz RS2 für eine drehfeste Kopplung dessen Hohlrades HR2 mit dessen Planetenträger PT2.

Es sind auch Kombinationen der in den Figuren 1 bis 6 dargestellten alternativen Schaltelementanordnungen zur Verblockung möglich. Weiterhin können auch andere der Schaltelemente B1, K1, K2, K3, K4 an anderen als den bisher gezeigten Positionen in der Getriebestruktur gemäß der Erfindung angeordnet werden. So ist es beispielsweise bei der Getriebeanordnung gemäß der Fig. 3 möglich, das zweite Schaltelement K2 nahe der in der Fig. 3 rechten Seite des gehäusefesten Bauteils GH zu versetzten, indem der Planetenträger PT3 des dritten Planetenradsatzes RS3 radial innen als Hohlwelle ausbildet und die Getriebeeingangswelle GE durch diese hindurch verlängert ist.

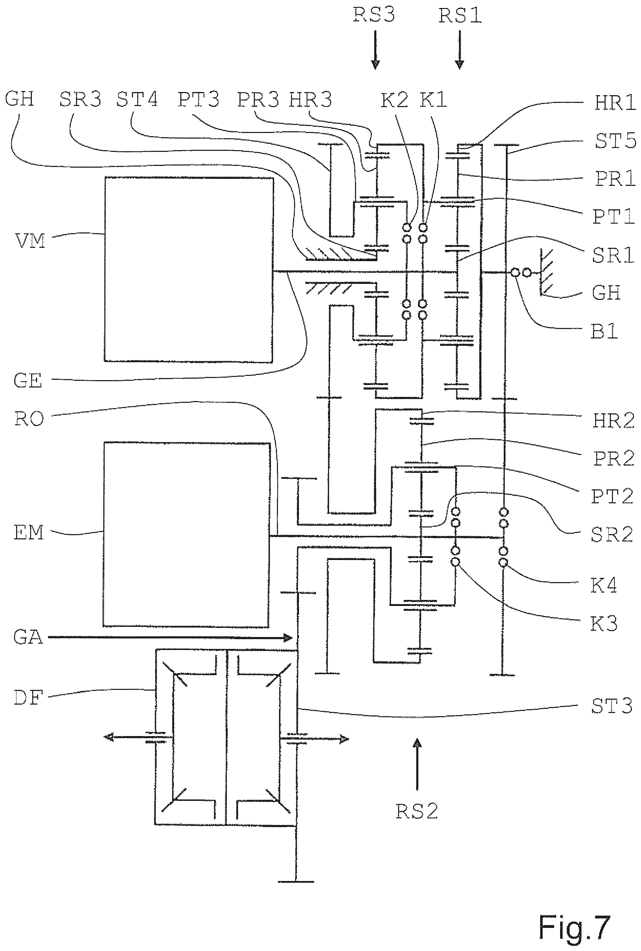

Die Fig. 7 zeigt eine andere Getriebestruktur eines Planetengetriebes mit drei Planetenradsätzen RS1, RS2, RS3, einem Verbrennungsmotor VM und einer Elektromaschine EM. Die Anbindungen der einzelnen Elemente und die Funktionen dieses Planetengetriebes entsprechen dem in Fig. 1 dargestellten Planetengetriebe und werden daher nicht weiter im Einzelnen erläutert. Allerdings ist hier eine Aufteilung der Radsätze RS1, RS2, RS3 auf zwei achsparallele Hauptwellen, eine Getriebeeingangswelle GE bzw. Antriebswelle des Verbrennungsmotors VM und eine Rotorwelle RO der Elektromaschine EM vorgesehen.

Die ersten beiden Radsätze RS1, RS2 sind koaxial zum Verbrennungsmotor VM angeordnet. Der zweite Radsatz RS2 ist dazu achsparallel angeordnet. Die Elektromaschine EM ist dem zweiten Radsatz RS2 koaxial vorgelagert. Zur Kraftübertragung zwischen den beiden Hauptwellen GE, RO bzw. den darauf angeordneten Radsätzen RS1, RS2 bzw. RS3 sind zusätzlich zwei Stirnradstufen vorgesehen, die hier als vierte Stirnradstufe ST4 bzw. fünfte Stirnradstufe ST5 bezeichnet werden. Die vierte Stirnradstufe ST4 stellt eine Antriebsverbindung zwischen dem Planetenträger PT3 des dritten Radsatzes RS3 und dem Hohlrad HR2 des zweiten Planetenradsatzes RS2 dar. Die fünfte Stirnradstufe ST5 stellt eine schaltbare Antriebsverbindung zwischen dem Hohlrad HR1 des ersten Radsatzes RS1 und dem Sonnenrad SR2 des zweiten Radsatzes RS2 dar. Der Abtrieb von dem Planetenträger PT2 des zweiten Radsatzes RS2 zu dem Differenzialgetriebe DF ist über eine einfache Stirnradstufe gegeben, die hier als dritte Stirnradstufe ST3 bezeichnet wird.

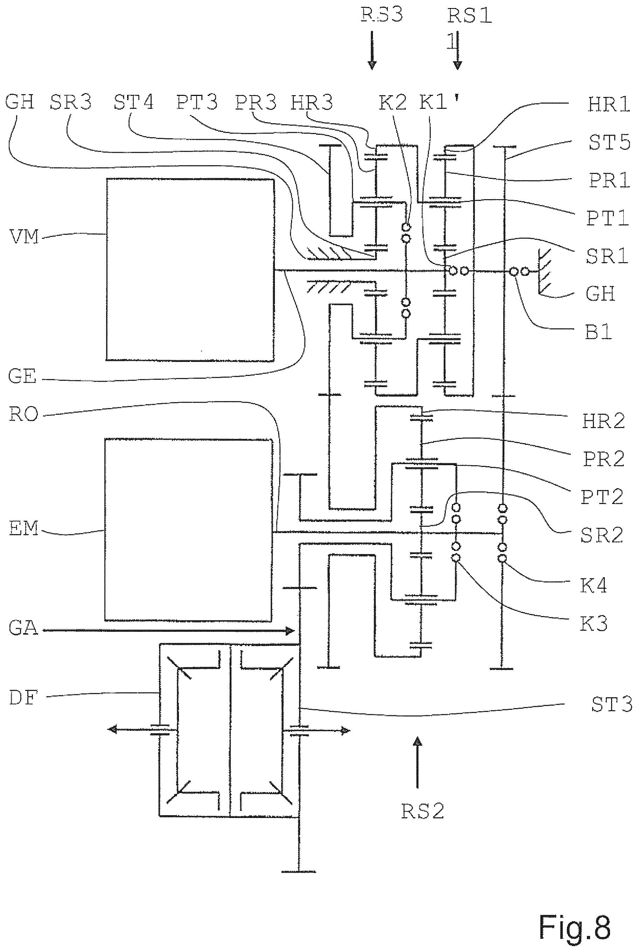

Auch bei der Getriebeanordnung gemäß Fig. 7 sind verschiedene Möglichkeiten für ein Verblocken der ersten und zweiten Planetenradsätze RS1, RS2 gegeben. Die Figuren 8, 9, 10 und 11 zeigen zueinander alternative Möglichkeiten zur wirkungsgleichen Verblockung der ersten und zweiten Planetenradsätze RS1, RS2 der Getriebeanordnung der Fig. 7.

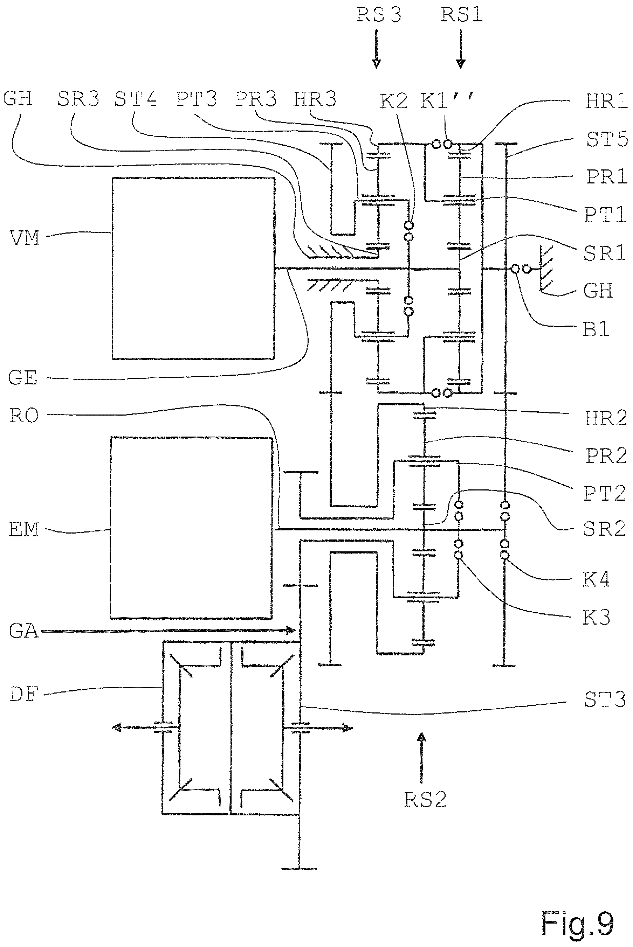

Bei dem ersten Planetenradsatz RS1 der Fig. 7 ist dessen Planetenträger PT1 mittels der Schaltkupplung K1 mit dessen Sonnenrad SR1 koppelbar. Bei dem ersten Planetenradsatz RS1 der Fig. 8 ist dessen Hohlrad HR1 mittels einer Schaltkupplung K1' mit dem Sonnenrad SR1 koppelbar. Bei dem ersten Planetenradsatz RS1 der Fig. 9 ist dessen Hohlrad HR1 durch eine Schaltkupplung K1" mit dessen Planetenträger PT1 koppelbar.

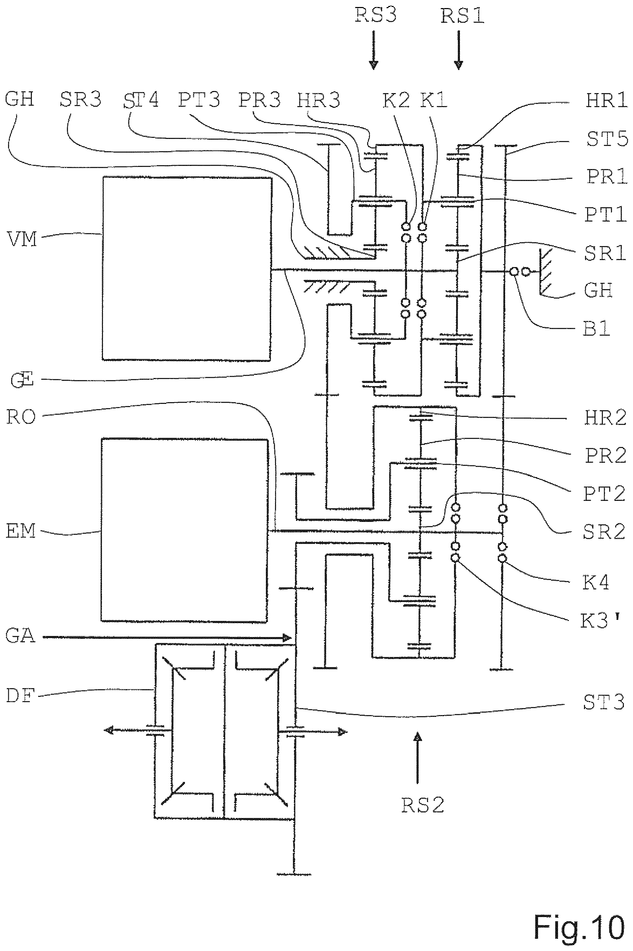

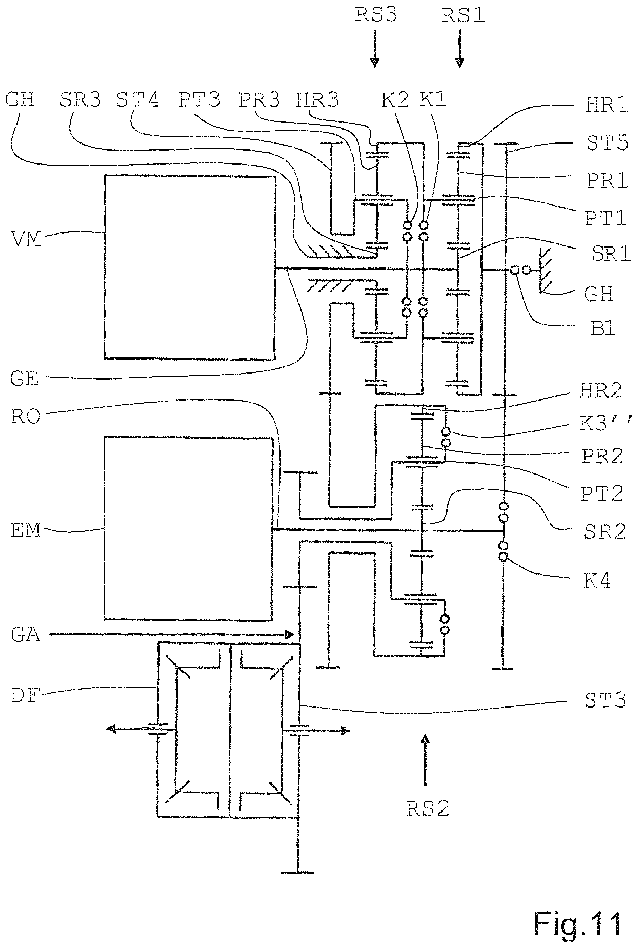

Bei dem zweiten Planetenradsatz RS2 der Fig. 7 ist dessen Planetenträger PT2 mittels der Schaltkupplung K3 mit dessen Sonnenrad SR2 koppelbar. Als eine Alternative dazu ist bei dem zweiten Planetenradsatz RS2 der Fig. 10 durch ein Schaltelement K3' dessen Hohlrad HR2 mit dessen Sonnenrad SR2 koppelbar. Eine weitere Alternative zeigt die Fig.11. Demnach ist durch eine Schaltkupplung K3" des zweiten Planetenradsatzes RS2 eine Kopplung dessen Hohlrads HR2 mit dessen Planetenträger PT2 möglich.

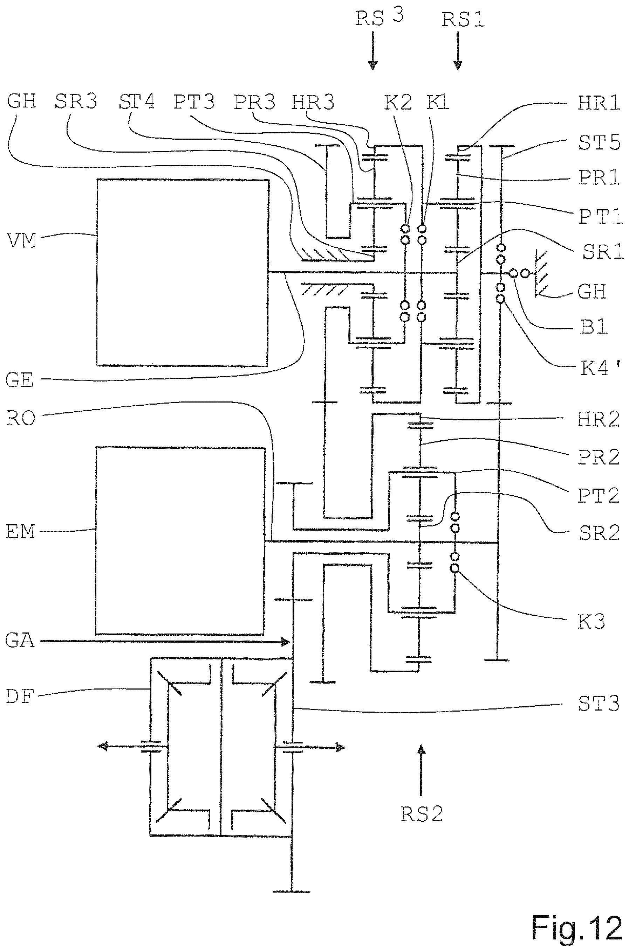

Da es bei einem Stirnradpaar, das über ein Schaltelement mit einer Welle verbindbar ist, unerheblich ist, welchem der beiden Stirnräder das Schaltelement zugeordnet ist, kann das Schaltelement entsprechend verlagert angeordnet sein. Dies zeigt Fig. 12 am Beispiel des vierten Schaltelements K4 zur Schaltung der Kraftübertragung zwischen dem Hohlrad HR1 des ersten Planetenradsatzes RS1 und dem Sonnenrads SR2 des zweiten Planetenradsatzes RS2 bzw. der Rotorwelle RO der Elektromaschine EM über das betreffende fünfte Stirnradpaar ST5. Im Vergleich zu der schaltbaren Verbindung der Fig. 7 über die Schaltkupplung K4 ist ein viertes Schaltelement K4' auf die Seite des ersten Radsatzes RS1 verlegt angeordnet, mittels dem das betreffende Stirnrad des fünften Stirnradpaares ST5 mit dem Hohlrad HR1 des ersten Radsatzes RS1 drehfest verbindbar oder von diesem lösbar ist.

### Bezugszeichenliste

- B1: Schaltelement, Schaltbremse
- DF: Differenzialgetriebe
- EM: Elektromaschine
- E1: Erste elektromotorisch angetriebene Gangstufe
- E2: Zweite elektromotorisch angetriebene Gangstufe
- GA: Getriebeabtrieb
- GE: Getriebeeingangswelle, Antriebswelle
- GH: Gehäuse, gehäusefestes Bauteil
- HR1: Hohlrad des Radsatzes RS1
- HR2: Hohlrad des Radsatzes RS2
- HR3: Hohlrad des Radsatzes RS3
- i: Übersetzung
- i0_RS1: Standübersetzung des Radsatzes RS1
- i0_RS2: Standübersetzung des Radsatzes RS2
- i0_RS3: Standübersetzung des Radsatzes RS3
- K1, K1', K1": Schaltelement, Schaltkupplung
- K2: Schaltelement, Schaltkupplung
- K3, K3', K3": Schaltelement, Schaltkupplung
- K4, K4': Schaltelement, Schaltkupplung
- M1: Erste verbrennungsmotorisch angetriebene Gangstufe
- M2: Zweite verbrennungsmotorisch angetriebene Gangstufe
- M3: Dritte verbrennungsmotorisch angetriebene Gangstufe
- M4: Vierte verbrennungsmotorisch angetriebene Gangstufe
- M5: Fünfte verbrennungsmotorisch angetriebene Gangstufe
- M6: Sechste verbrennungsmotorisch angetriebene Gangstufe
- PR1: Planetenrad des Radsatzes RS1
- PR2: Planetenrad des Radsatzes RS2
- PR3: Planetenrad des Radsatzes RS3
- PT1: Planetenträger des Radsatzes RS1
- PT2: Planetenträger des Radsatzes RS2
- PT3: Planetenträger des Radsatzes RS3
- ϕ: Gangsprung
- RO: Rotor, Rotorwelle der Elektromaschine EM
- RS1: Erster Planetenradsatz
- RS2: Zweiter Planetenradsatz
- RS3: Dritter Planetenradsatz
- SR1: Sonnenrad des Radsatzes RS1
- SR2: Sonnenrad des Radsatzes RS2
- SR3: Sonnenrad des Radsatzes RS3
- ST1: Erstes Stirnradpaar, erste Stirnradstufe
- ST2: Zweites Stirnradpaar, zweite Stirnradstufe
- ST3: Drittes Stirnradpaar, dritte Stirnradstufe
- ST4: Viertes Stirnradpaar, vierte Stirnradstufe
- ST5: Fünftes Stirnradpaar, fünfte Stirnradstufe

## Patentansprüche

1. Planetengetriebe für einen Hybridantrieb mit einem Verbrennungsmotor (VM) und einer Elektromaschine eines Kraftfahrzeugs, aufweisend drei gekoppelte Planetenradsätze (RS1, RS2, RS3), jeweils
- mit einem Hohlrad (HR1, HR2, HR3),
- einem Sonnenrad (SR1, SR2, SR3) und
- einem mehrere Planeten (PR1, PR2, PR3) führenden Planetenträger (PT1, PT2, PT3), und mit mehreren Schaltelementen (B1, K1, K1', K1", K2, K3, K3', K3", K4, K4') zur Realisierung von mehreren verbrennungsmotorisch und/oder elektromotorisch antreibbaren Gangstufen (M1, M2, M3, M4, M5, M6, E1, E2),
- wobei ein erster (RS1), ein zweiter (RS2) und ein dritter Planetenradsatz (RS3) der drei Planetenradsätze (RS1, RS2, RS3) jeweils als Minusgetriebe ausgebildet sind,
- wobei bei einem ersten Planetenradsatz (RS1) das Hohlrad (HR1) mit einem gehäusefesten Bauteil (GH) verbindbar sowie mit einem Rotor (RO) der Elektromaschine (EM) verbindbar oder antriebsverbindbar ist,
- wobei der Planetenträger (PT1) des ersten Planetenradsatz (RS1) mit dem Hohlrad (HR3) des dritten Planetenradsatzes (RS3) verbunden ist,
- wobei das Sonnenrad (SR1) des ersten Planetenradsatz (RS1) mit einer Getriebeeingangswelle (GE) verbunden sowie mit dem Planetenträger (PT3) des dritten Planetenradsatzes (RS3) verbindbar ist, und zwei der Elemente Hohlrad (HR1), Planetenträger (PT1), Sonnenrad (SR1) des ersten Planetenradsatz (RS1) miteinander verbindbar sind,
- wobei bei dem zweiten Planetenradsatz (RS2) das Hohlrad (HR2) mit dem Planetenträger (PT3) des dritten Planetenradsatzes (RS3) verbunden oder antriebsverbunden ist,
- wobei der Planetenträger (PT2) des zweiten Planetenradsatzes (RS2) mit einem Getriebeabtrieb (GA) antriebsverbunden ist, und
- wobei bei dem dritten Planetenradsatz (RS3) dessen Sonnenrad (SR3) mit dem gehäusefesten Bauteil (GH) verbunden oder verbindbar ist,
**dadurch gekennzeichnet,**
- **dass** das Sonnenrad (SR2) des zweiten Planetenradsatzes (RS2) mit dem Rotor (RO) der Elektromaschine (EM) verbunden ist, und
- **dass** zwei der Elemente Hohlrad (HR2), Planetenträger (PT2), Sonnenrad (SR2) des zweiten Planetenradsatzes (RS2) miteinander verbindbar sind.

2. Planetengetriebe, für einen Hybridantrieb mit einem Verbrennungsmotor (VM) und einer Elektromaschine eines Kraftfahrzeugs, aufweisend drei gekoppelte Planetenradsätze (RS1, RS2, RS3), jeweils
- mit einem Hohlrad (HR1, HR2, HR3),
- einem Sonnenrad (SR1, SR2, SR3) und
- einem mehrere Planeten (PR1, PR2, PR3) führenden Planetenträger (PT1, PT2, PT3), und mit mehreren Schaltelementen (B1, K1, K1', K1 ", K2, K3, K3', K3", K4, K4') zur Realisierung von mehreren verbrennungsmotorisch und/oder elektromotorisch antreibbaren Gangstufen (M1, M2, M3, M4, M5, M6, E1, E2),
- wobei ein erster Planetenradsatz (RS1) der drei Planetenradsätze (RS1, RS2, RS3) als Plusgetriebe ausgebildet ist,
- wobei ein zweiter (RS2) und ein dritter Planetenradsatz (RS3) der drei Planetenradsätze (RS1, RS2, RS3) jeweils als Minusgetriebe ausgebildet sind,
- wobei bei dem ersten Planetenradsatz (RS1) der Planetenträger (PT1) mit dem gehäusefesten Bauteil (GH) verbindbar sowie mit einem Rotor (RO) der Elektromaschine (EM) verbindbar oder antriebsverbindbar ist,
- wobei das Hohlrad (HR1) des ersten Planetenradsatz (RS1) mit dem Hohlrad (HR3) des dritten Planetenradsatzes (RS3) verbunden ist,
- wobei das Sonnenrad (SR1) des ersten Planetenradsatz (RS1) mit einer Getriebeeingangswelle (GE) verbunden sowie mit dem Planetenträger (PT3) des dritten Planetenradsatzes (RS3) verbindbar ist, und zwei der Elemente Hohlrad (HR1), Planetenträger (PT1), Sonnenrad (SR1) des ersten Planetenradsatz (RS1) miteinander verbindbar sind,
- wobei bei dem Planetenradsatz (RS2) das Hohlrad (HR2) mit dem Planetenträger (PT3) des dritten Planetenradsatzes (RS3) verbunden oder antriebsverbunden ist,
- wobei der Planetenträger (PT2) des zweiten Planetenradsatzes (RS2) mit dem Getriebeabtrieb (GA) antriebsverbunden ist,
- wobei bei dem dritten Planetenradsatz (RS3) dessen Sonnenrad (SR3) mit dem gehäusefesten Bauteil (GH) verbunden oder verbindbar ist,
- wobei das Sonnenrad (SR2) des zweiten Planetenradsatzes (RS2) mit dem Rotor (RO) der Elektromaschine (EM) verbunden ist, und
- wobei zwei der Elemente Hohlrad (HR2), Planetenträger (PT2), Sonnenrad (SR2) des zweiten Planetenradsatzes (RS2) miteinander verbindbar sind.

3. Planetengetriebe für einen Hybridantrieb mit einem Verbrennungsmotor (VM) und einer Elektromaschine eines Kraftfahrzeugs, aufweisend drei gekoppelte Planetenradsätze (RS1, RS2, RS3), jeweils
- mit einem Hohlrad (HR1, HR2, HR3),
- einem Sonnenrad (SR1, SR2, SR3) und
- einem mehrere Planeten (PR1, PR2, PR3) führenden Planetenträger (PT1, PT2, PT3), und mit mehreren Schaltelementen (B1, K1, K1', K1 ", K2, K3, K3', K3", K4, K4') zur Realisierung von mehreren verbrennungsmotorisch und/oder elektromotorisch antreibbaren Gangstufen (M1, M2, M3, M4, M5, M6, E1, E2),
- wobei ein erster (RS1) und ein dritter Planetenradsatz (RS3) der drei Planetenradsätze (RS1, RS2, RS3) jeweils als Minusgetriebe ausgebildet sind,
- wobei ein zweiter Planetenradsatz (RS2) der drei Planetenradsätze (RS1, RS2, RS3) als Plusgetriebe ausgebildet ist,
- wobei bei dem ersten Planetenradsatz (RS1) das Hohlrad (HR1) mit dem gehäusefesten Bauteil (GH) verbindbar sowie mit einem Rotor (RO) der Elektromaschine (EM) verbindbar oder antriebsverbindbar ist,
- wobei der Planetenträger (PT1) des ersten Planetenradsatz (RS1) mit dem Hohlrad (HR3) des dritten Planetenradsatzes (RS3) verbunden ist,
- wobei das Sonnenrad (SR1) des ersten Planetenradsatz (RS1) mit einer Getriebeeingangswelle (GE) verbunden sowie mit dem Planetenträger (PT3) des dritten Planetenradsatzes (RS3) verbindbar ist, und zwei der Elemente Hohlrad (HR1), Planetenträger (PT1), Sonnenrad (SR1) des ersten Planetenradsatz (RS1) miteinander verbindbar sind,
- wobei bei dem zweiten Planetenradsatz (RS2) der Planetenträger (PT2) mit dem Planetenträger (PT3) des dritten Planetenradsatzes (RS3) verbunden oder antriebsverbunden ist,
- wobei das Hohlrad (HR2) des zweiten Planetenradsatzes (RS2) mit einem Getriebeabtrieb (GA) antriebsverbunden ist,
- wobei bei dem dritten Planetenradsatz (RS3) dessen Sonnenrad (SR3) mit dem gehäusefesten Bauteil (GH) verbunden oder verbindbar ist,
- wobei das Sonnenrad (SR2) des zweiten Planetenradsatzes (RS2) mit dem Rotor (RO) der Elektromaschine (EM) verbunden ist, und
- wobei zwei der Elemente Hohlrad (HR2), Planetenträger (PT2), Sonnenrad (SR2) des zweiten Planetenradsatzes (RS2) miteinander verbindbar sind.

4. Planetengetriebe nach einem der Ansprüche 1 bis 3, **dadurch gekennzeichnet, dass** der Verbrennungsmotor (VM), die Elektromaschine (EM) sowie die drei Planetenradsät-ze (RS1, RS2, RS3) eine koaxiale Anordnung bilden.

5. Planetengetriebe nach einem der Ansprüche 1 bis 3, **dadurch gekennzeichnet, dass** der Verbrennungsmotor (VM) und die Elektromaschine (EM) achsparallel zueinander angeordnet sind, wobei der erste Planetenradsatz (RS1) und der dritte Planetenrad-satz (RS3) koaxial zu dem Verbrennungsmotor (VM) und der zweite Planetenrad-satz (RS2) koaxial zu der Elektromaschine (EM) angeordnet sind, wobei eine schaltbare Antriebsverbindung zwischen einem der beiden Elemente Hohlrad (HR1) oder Planetenträger (PT1) des ersten Planetenradsatzes (RS1) und der Elektromaschine (EM) über eine oder mehrere Stirnradstufen (ST5) realisiert ist.

6. Planetengetriebe nach einem der Ansprüche 1 bis 5, dadurch gekennzeich-net, dass die Antriebsverbindung zwischen einem der beiden Elemente Hohlrad (HR2) oder Planetenträger (PT2) des zweiten Planetenradsatzes (RS2) und dem Getriebeab-trieb (GA) über eine oder mehrere Stirnradstufen (ST1, ST2, ST3) und/oder Zugmittel-triebe realisiert ist.

7. Planetengetriebe nach einem der Ansprüche 1 bis 6, dadurch gekennzeich-net, dass die drei Planetenradsätze (RS1, RS2, RS3) zur Realisierung von mindestens sechs zugkraftunterbrechungsfrei schaltenden Vorwärtsgangstufen (M1, M2, M3, M4, M5, M6) mittels fünf unsynchronisierte Schaltelemente (B1, K1, K1', K1", K2, K3, K3', K3", K4, K4') schaltbar sind, wobei vier der Schaltelemente als formschlüssige Schalt-kupplungen (K1, K1', K1", K2, K3, K3', K3", K4, K4') und eines der Schaltelemente als eine formschlüssige Schaltbremse (B1) ausgebildet sind.

8. Planetengetriebe nach einem der Ansprüche 1 bis 7, dadurch gekennzeich-net, dass bei dem ersten Planetenradsatz (RS1) und/oder bei dem zweiten Planetenradsatz (RS2) der Planetenträger (PT1, PT2) mit dem Sonnenrad (SR1, SR2) verbindbar ist.

9. Planetengetriebe nach einem der Ansprüche 1 bis 7, dadurch gekennzeich-net, dass bei dem ersten Planetenradsatz (RS1) und/oder bei dem zweiten Planetenradsatz (RS2) das Hohlrad (HR1, HR2) mit dem Sonnenrad (SR1, SR2) verbindbar ist.

10. Planetengetriebe nach einem der Ansprüche 1 bis 7, dadurch gekennzeich-net, dass bei dem ersten Planetenradsatz (RS1) und/oder bei dem zweiten Planetenradsatz (RS2) das Hohlrad (HR1, HR2) mit dem Planetenträger (PT1, PT2) verbindbar ist.

11. Planetengetriebe nach einem der Ansprüche 1 bis 10, dadurch gekennzeich-net, dass dasjenige Schaltelement (K3, K3', K3"), welches zur Herstellung einer Verbindung zwischen zwei der Elemente Hohlrad (HR2), Planetenträger (PT2), Sonnenrad (SR2) des zweiten Planetenradsatzes (RS2) vorhanden ist, als ein Reibschaltelement ausgebildet ist, um zusätzlich als ein Lastschalt- oder Anfahrelement zu fungieren.

12. Planetengetriebe nach einem der Ansprüche 1 bis 11, **dadurch gekennzeichnet, dass** dieses in eine Schaltstellung zum Laden eines elektrischen Energiespeichers bei stehendem oder rollendem Fahrzeug bringbar ist.

## Claims

1. Planetary gearing for a hybrid drive, having an internal combustion engine (VM) and having an electric machine, of a motor vehicle, comprising three coupled planetary gear sets (RS1, RS2, RS3), in each case
- having an internal gear (HR1, HR2, HR3),
- a sun gear (SR1, SR2, SR3) and
- a planet carrier (PT1, PT2, PT3) which guides multiple planets (PR1, PR2, PR3), and having multiple shift elements (B1, K1, K1', K1'', K2, K3, K3', K3", K4, K4') for realizing multiple gear stages (M1, M2, M3, M4, M5, M6, E1, E2) which can be implemented with internal combustion engine and/or electric motor drive,
- wherein a first (RS1), a second (RS2) and a third planetary gear set (RS3) of the three planetary gear sets (RS1, RS2, RS3) are in each case in the form of minus gearings,
- wherein, in the case of a first planetary gear set (RS1), the internal gear (HR1) is connectable to a component (GH) fixed with respect to a housing and is connectable or connectable in terms of drive to a rotor (RO) of the electric machine (EM),
- wherein the planet carrier (PT1) of the first planetary gear set (RS1) is connected to the internal gear (HR3) of the third planetary gear set (RS3),
- wherein the sun gear (SR1) of the first planetary gear set (RS1) is connected to a gearing input shaft (GE) and connectable to the planet carrier (PT3) of the third planetary gear set (RS3), and two of the elements of internal gear (HR1), planet carrier (PT1), sun gear (SR1) of the first planetary gear set (RS1) are connectable to one another,
- wherein, in the case of the second planetary gear set (RS2), the internal gear (HR2) is connected or connected in terms of drive to the planet carrier (PT3) of the third planetary gear set (RS3),
- wherein the planet carrier (PT2) of the second planetary gear set (RS2) is connected in terms of drive to a gearing drive output (GA), and
- wherein, in the case of the third planetary gear set (RS3), the sun gear (SR3) thereof is connected or connectable to the component (GH) fixed with respect to a housing,
**characterized**
- **in that** the sun gear (SR2) of the second planetary gear set (RS2) is connected to the rotor (RO) of the electric machine (EM), and
- **in that** two of the elements of internal gear (HR2), planet carrier (PT2), sun gear (SR2) of the second planetary gear set (RS2) are connectable to one another.

2. Planetary gearing for a hybrid drive, having an internal combustion engine (VM) and having an electric machine, of a motor vehicle, comprising three coupled planetary gear sets (RS1, RS2, RS3), in each case
- having an internal gear (HR1, HR2, HR3),
- a sun gear (SR1, SR2, SR3) and
- a planet carrier (PT1, PT2, PT3) which guides multiple planets (PR1, PR2, PR3), and having multiple shift elements (B1, K1, K1', K1'', K2, K3, K3', K3'', K4, K4') for realizing multiple gear stages (M1, M2, M3, M4, M5, M6, E1, E2) which can be implemented with internal combustion engine and/or electric motor drive,
- wherein a first planetary gear set (RS1) of the three planetary gear sets (RS1, RS2, RS3) is in the form of a plus gearing,
- wherein a second (RS2) and a third planetary gear set (RS3) of the three planetary gear sets (RS1, RS2, RS3) are in each case in the form of minus gearings,
- wherein, in the case of the first planetary gear set (RS1), the planet carrier (PT1) is connectable to the component (GH) fixed with respect to a housing and is connectable or connectable in terms of drive to a rotor (RO) of the electric machine (EM),
- wherein the internal gear (HR1) of the first planetary gear set (RS1) is connected to the internal gear (HR3) of the third planetary gear set (RS3),
- wherein the sun gear (SR1) of the first planetary gear set (RS1) is connected to a gearing input shaft (GE) and is connectable to the planet carrier (PT3) of the third planetary gear set (RS3), and two of the elements of internal gear (HR1), planet carrier (PT1), sun gear (SR1) of the first planetary gear set (RS1) are connectable to one another,
- wherein, in the case of the planetary gear set (RS2), the internal gear (HR2) is connected or connected in terms of drive to the planet carrier (PT3) of the third planetary gear set (RS3),
- wherein the planet carrier (PT2) of the second planetary gear set (RS2) is connected in terms of drive to the gearing drive output (GA),
- wherein, in the case of the third planetary gear set (RS3), the sun gear (SR3) thereof is connected or connectable to the component (GH) fixed with respect to a housing,
- wherein the sun gear (SR2) of the second planetary gear set (RS2) is connected to the rotor (RO) of the electric machine (EM), and
- wherein two of the elements of internal gear (HR2), planet carrier (PT2), sun gear (SR2) of the second planetary gear set (RS2) are connectable to one another.

3. Planetary gearing for a hybrid drive, having an internal combustion engine (VM) and having an electric machine, of a motor vehicle, comprising three coupled planetary gear sets (RS1, RS2, RS3), in each case
- having an internal gear (HR1, HR2, HR3),
- a sun gear (SR1, SR2, SR3) and
- a planet carrier (PT1, PT2, PT3) which guides multiple planets (PR1, PR2, PR3), and having multiple shift elements (B1, K1, K1', K1'', K2, K3, K3', K3'', K4, K4') for realizing multiple gear stages (M1, M2, M3, M4, M5, M6, E1, E2) which can be implemented with internal combustion engine and/or electric motor drive,
- wherein a first (RS1) and a third planetary gear set (RS3) of the three planetary gear sets (RS1, RS2, RS3) are in each case in the form of minus gearings,
- wherein a second planetary gear set (RS2) of the three planetary gear sets (RS1, RS2, RS3) is in the form of a plus gearing,
- wherein, in the case of the first planetary gear set (RS1), the internal gear (HR1) is connectable to the component (GH) fixed with respect to a housing and is connectable or connectable in terms of drive to a rotor (RO) of the electric machine (EM),
- wherein the planet carrier (PT1) of the first planetary gear set (RS1) is connected to the internal gear (HR3) of the third planetary gear set (RS3),
- wherein the sun gear (SR1) of the first planetary gear set (RS1) is connected to a gearing input shaft (GE) and connectable to the planet carrier (PT3) of the third planetary gear set (RS3), and two of the elements of internal gear (HR1), planet carrier (PT1), sun gear (SR1) of the first planetary gear set (RS1) are connectable to one another,
- wherein, in the case of the second planetary gear set (RS2), the planet carrier (PT2) is connected or connected in terms of drive to the planet carrier (PT3) of the third planetary gear set (RS3),
- wherein the internal gear (HR2) of the second planetary gear set (RS2) is connected in terms of drive to a gearing drive output (GA),
- wherein, in the case of the third planetary gear set (RS3), the sun gear (SR3) thereof is connected or connectable to the component (GH) fixed with respect to a housing,
- wherein the sun gear (SR2) of the second planetary gear set (RS2) is connected to the rotor (RO) of the electric machine (EM), and
- wherein two of the elements of internal gear (HR2), planet carrier (PT2), sun gear (SR2) of the second planetary gear set (RS2) are connectable to one another.

4. Planetary gearing according to one of Claims 1 to 3, **characterized in that** the internal combustion engine (VM), the electric machine (EM) and the three planetary gear sets (RS1, RS2, RS3) form a coaxial arrangement.

5. Planetary gearing according to one of Claims 1 to 3, **characterized in that** the internal combustion engine (VM) and the electric machine (EM) are arranged axially parallel to one another, wherein the first planetary gear set (RS1) and the third planetary gear set (RS3) are arranged coaxially with respect to the internal combustion engine (VM) and the second planetary gear set (RS2) is arranged coaxially with respect to the electric machine (EM), wherein a shiftable drive connection between one of the two elements of internal gear (HR1) or planet carrier (PT1) of the first planetary gear set (RS1) and the electric machine (EM) is realized by way of one or more spur gear stages (ST5).

6. Planetary gearing according to one of Claims 1 to 5, **characterized in that** the drive connection between one of the two elements of internal gear (HR2) or planet carrier (PT2) of the second planetary gear set (RS2) and the gearing drive output (GA) is realized by way of one or more spur gear stages (ST1, ST2, ST3) and/or traction mechanism drives.

7. Planetary gearing according to one of Claims 1 to 6, **characterized in that**, in order to realize at least six forward gear stages (M1, M2, M3, M4, M5, M6) which are shifted without an interruption in traction power, the three planetary gear sets (RS1, RS2, RS3) are shiftable by way of five non-synchronised shift elements (B1, K1, K1', K1'', K2, K3, K3', K3'', K4, K4'), wherein four of the shift elements are in the form of positively locking shift clutches (K1, K1', K1'', K2, K3, K1', K3'', K4, K4') and one of the shift elements is in the form of a positively locking shift brake (B1).

8. Planetary gearing according to one of Claims 1 to 7, **characterized in that**, in the case of the first planetary gear set (RS1) and/or in the case of the second planetary gear set (RS2), the planet carrier (PT1, PT2) is connectable to the sun gear (SR1, SR2).

9. Planetary gearing according to one of Claims 1 to 7, **characterized in that**, in the case of the first planetary gear set (RS1) and/or in the case of the second planetary gear set (RS2), the internal gear (HR1, HR2) is connectable to the sun gear (SR1, SR2).

10. Planetary gearing according to one of Claims 1 to 7, **characterized in that**, in the case of the first planetary gear set (RS1) and/or in the case of the second planetary gear set (RS2), the internal gear (HR1, HR2) is connectable to the planet carrier (PT1, PT2).

11. Planetary gearing according to one of Claims 1 to 10, **characterized in that** that shift element (K3, K3', K3'') which is provided for producing a connection between two of the elements of internal gear (HR2), planet carrier (PT2), sun gear (SR2) of the second planetary gear set (RS2) is in the form of a friction-type shift element in order to additionally function as a powershift or starting element.

12. Planetary gearing according to one of Claims 1 to 11, **characterized in that** said planetary gearing can be placed into a shift position for the charging of an electrical energy store when the vehicle is at a standstill or rolling.

## Revendications

1. Boîte de vitesses épicycloïdale pour un entraînement hybride comprenant un moteur à combustion interne (VM) et une machine électrique d'un véhicule automobile, présentant trois trains planétaires accouplés (RS1, RS2, RS3), comprenant chacun
- une couronne dentée (HR1, HR2, HR3),
- une roue solaire (SR1, SR2, SR3) et
- un porte-satellites (PT1, PT2, PT3) guidant plusieurs satellites (PR1, PR2, PR3), et plusieurs éléments de commutation (B1, K1, K1', K1'', K2, K3, K3, K3'', K4, K4') pour réaliser plusieurs rapports de vitesse (M1, M2, M3, M4, M5, M6, E1, E2) pouvant être entraînés par le moteur à combustion interne et/ou par le moteur électrique,
- un premier (RS1), un deuxième (RS2) et un troisième (RS3) train planétaire parmi les trois trains planétaires (RS1, RS2, RS3) étant à chaque fois réalisés sous forme d'engrenages négatifs,
- dans le cas d'un premier train planétaire (RS1), la couronne dentée (HR1) pouvant être connectée à un composant (GH) fixé au boîtier et pouvant également être connectée, ou connectée par entraînement, à un rotor (RO) de la machine électrique (EM),
- le porte-satellites (PT1) du premier train planétaire (RS1) étant connecté à la couronne dentée (HR3) du troisième train planétaire (RS3),
- la roue solaire (SR1) du premier train planétaire (RS1) étant connectée à un arbre d'entrée de boîte de vitesses (GE) et pouvant être connectée au porte-satellites (PT3) du troisième train planétaire (RS3), et deux des éléments incluant la couronne dentée (HR1), le porte-satellites (PT1), et la roue solaire (SR1) du premier train planétaire (RS1), pouvant être connectés l'un à l'autre,
- dans le cas du deuxième train planétaire (RS2), la couronne dentée (HR2) étant connectée ou étant connectée par entraînement au porte-satellites (PT3) du troisième train planétaire (RS3),
- le porte-satellites (PT2) du deuxième train planétaire (RS2) étant connecté par entraînement à une prise de force de la boîte de vitesses (GA), et
- dans le cas du troisième train planétaire (RS3), sa roue solaire (SR3) est connectée ou peut être connectée au composant (GH) fixé au boîtier,
**caractérisée en ce que**
- la roue solaire (SR2) du deuxième train planétaire (RS2) est connectée au rotor (RO) de la machine électrique (EM), et
- deux des éléments incluant la couronne dentée (HR2), le porte-satellites (PT2), et la roue solaire (SR2) du deuxième train planétaire (RS2), pouvant être connectés l'un à l'autre.

2. Boîte de vitesses épicycloïdale pour un entraînement hybride comprenant un moteur à combustion interne (VM) et une machine électrique d'un véhicule automobile, présentant trois trains planétaires accouplés (RS1, RS2, RS3), comprenant chacun
- une couronne dentée (HR1, HR2, HR3),
- une roue solaire (SR1, SR2, SR3) et
- un porte-satellites (PT1, PT2, PT3) guidant plusieurs satellites (PR1, PR2, PR3), et plusieurs éléments de commutation (B1, K1, K1', K1'', K2, K3, K3, K3'', K4, K4') pour réaliser plusieurs rapports de vitesse (M1, M2, M3, M4, M5, M6, E1, E2) pouvant être entraînés par le moteur à combustion interne et/ou par le moteur électrique,
- un premier train planétaire (RS1) des trois trains planétaires (RS1, RS2, RS3) étant réalisé sous forme d'engrenage positif,
- un deuxième (RS2) et un troisième (RS3) train planétaire des trois trains planétaires (RS1, RS2, RS3) étant à chaque fois réalisés sous forme d'engrenages négatifs,
- dans le cas du premier train planétaire (RS1), le porte-satellites (PT1) pouvant être connecté au composant (GH) fixé au boîtier et pouvant être connecté ou pouvant être connecté par entraînement à un rotor (RO) de la machine électrique (EM),
- la couronne dentée (HR1) du premier train planétaire (RS1) étant connectée à la couronne dentée (HR3) du troisième train planétaire (RS3),
- la roue solaire (SR1) du premier train planétaire (RS1) étant connectée à un premier arbre d'entrée de boîte de vitesses (GE) et pouvant être connectée au porte-satellites (PT3) du troisième train planétaire (RS3), et deux des éléments incluant la couronne dentée (HR1), le porte-satellites (PT1), et la roue solaire (SR1) du premier train planétaire (RS1), pouvant être connectés l'un à l'autre,
- dans le cas du train planétaire (RS2), la couronne dentée (HR2) étant connectée ou étant connectée par entraînement au porte-satellites (PT3) du troisième train planétaire (RS3),
- le porte-satellites (PT2) du deuxième train planétaire (RS2) étant connecté par entraînement à la prise de force de la boîte de vitesses (GA),
- dans le cas du troisième train planétaire (RS3), sa roue solaire (SR3) est connectée ou peut être connectée au composant (GH) fixé au boîtier,
- la roue solaire (SR2) du deuxième train planétaire (RS2) étant connectée au rotor (RO) de la machine électrique (EM), et
- deux des éléments incluant la couronne dentée (HR2), le porte-satellites (PT2), et la roue solaire (SR2) du deuxième train planétaire (RS2) pouvant être connectés l'un à l'autre.

3. Boîte de vitesses épicycloïdale pour un entraînement hybride comprenant un moteur à combustion interne (VM) et une machine électrique d'un véhicule automobile, présentant trois trains planétaires accouplés (RS1, RS2, RS3), comprenant chacun
- une couronne dentée (HR1, HR2, HR3),
- une roue solaire (SR1, SR2, SR3) et
- un porte-satellites (PT1, PT2, PT3) guidant plusieurs satellites (PR1, PR2, PR3), et plusieurs éléments de commutation (B1, K1, K1', K1'', K2, K3, K3, K3'', K4, K4') pour réaliser plusieurs rapports de vitesse (M1, M2, M3, M4, M5, M6, E1, E2) pouvant être entraînés par le moteur à combustion interne et/ou par le moteur électrique,
- un premier (RS1) et un troisième (RS3) des trois trains planétaires (RS1, RS2, RS3) étant à chaque fois réalisés sous forme d'engrenages négatifs,
- un deuxième train planétaire (RS2) des trois trains planétaires (RS1, RS2, RS3) étant réalisé sous forme d'engrenage positif,
- dans le cas du premier train planétaire (RS1), la couronne dentée (HR1) pouvant être connectée au composant (GH) fixé au boîtier et pouvant être connectée ou pouvant être connectée par entraînement à un rotor (RO) de la machine électrique (EM),
- le porte-satellites (PT1) du premier train planétaire (RS1) étant connecté à la couronne dentée (HR3) du troisième train planétaire (RS3),
- la roue solaire (SR1) du premier train planétaire (RS1) étant connectée à un arbre d'entrée de boîte de vitesses (GE) et pouvant être connectée au porte-satellites (PT3) du troisième train planétaire (RS3), et deux des éléments incluant la couronne dentée (HR1), le porte-satellites (PT1), et la roue solaire (SR1) du premier train planétaire (RS1), pouvant être connectés l'un à l'autre,
- dans le cas du deuxième train planétaire (RS2), le porte-satellites (PT2) étant connecté ou étant connecté par entraînement au porte-satellites (PT3) du troisième train planétaire (RS3),
- la couronne dentée (HR2) du deuxième train planétaire (RS2) étant connectée par entraînement à une prise de force de la boîte de vitesses (GA),
- dans le cas du troisième train planétaire (RS3), sa roue solaire (SR3) étant connectée ou pouvant être connectée au composant (GH) fixé au boîtier,
- la roue solaire (SR2) du deuxième train planétaire (RS2) étant connectée au rotor (RO) de la machine électrique (EM), et
- deux des éléments incluant la couronne dentée (HR2), le porte-satellites (PT2), et la roue solaire (SR2) du deuxième train planétaire (RS2) pouvant être connectés l'un à l'autre.

4. Boîte de vitesses épicycloïdale selon l'une quelconque des revendications 1 à 3, **caractérisée en ce que** le moteur à combustion interne (VM), la machine électrique (EM) ainsi que les trois trains planétaires (RS1, RS2, RS3) forment un agencement coaxial.

5. Boîte de vitesses épicycloïdale selon l'une quelconque des revendications 1 à 3, **caractérisée en ce que** le moteur à combustion interne (VM) et la machine électrique (EM) sont disposés avec leurs axes parallèles l'un à l'autre, le premier train planétaire (RS1) et le troisième train planétaire (RS3) étant disposés coaxialement par rapport au moteur à combustion interne (VM) et le deuxième train planétaire (RS2) étant disposé coaxialement par rapport à la machine électrique (EM), une connexion par entraînement commutable entre l'un des deux éléments incluant la couronne dentée (HR1) ou le porte-satellites (PT1) du premier train planétaire (RS1) et la machine électrique (EM) étant réalisée par le biais d'un ou plusieurs étages à pignons droits (ST5).

6. Boîte de vitesses épicycloïdale selon l'une quelconque des revendications 1 à 5, **caractérisée en ce que** la connexion par entraînement entre l'un des deux éléments incluant la couronne dentée (HR2) ou le porte-satellites (PT2) du deuxième train planétaire (RS2) et la prise de force de la boïte de vitesse (GA) est réalisée par le biais d'un ou plusieurs étages à pignons droits (ST1, ST2, ST3) et/ou d'entraînements à moyens de traction.

7. Boîte de vitesses épicycloïdale selon l'une quelconque des revendications 1 à 6, **caractérisée en ce que** les trois trains planétaires (RS1, RS2, RS3), pour la réalisation d'au moins six rapports de vitesse de marche avant à commutation sans interruption de la force de traction (M1, M2, M3, M4, M5, M6) peuvent être commutés au moyen de cinq éléments de commutation non synchronisés (B1, K1, K1', K1'', K2, K3, K3', K3'', K4, K4'), quatre des éléments de commutation étant réalisés sous forme d'accouplements de commutation (K1, K1', K1'', K2, K3, K3', K3'', K4, K4') et l'un des éléments de commutation étant réalisé sous forme de frein de commutation à engagement par correspondance de formes (B1).

8. Boîte de vitesses épicycloïdale selon l'une quelconque des revendications 1 à 7, **caractérisée en ce que** dans le cas du premier train planétaire (RS1) et/ou dans le cas du deuxième train planétaire (RS2), le porte-satellites (PT1, PT2) peut être connecté à la roue solaire (SR1, SR2).

9. Boîte de vitesses épicycloïdale selon l'une quelconque des revendications 1 à 7, **caractérisée en ce que** dans le cas du premier train planétaire (RS1) et/ou dans le cas du deuxième train planétaire (RS2) la couronne dentée (HR1, HR2) peut être connectée à la roue solaire (SR1, SR2).

10. Boîte de vitesses épicycloïdale selon l'une quelconque des revendications 1 à 7, **caractérisée en ce que** dans le cas du premier train planétaire (RS1) et/ou dans le cas du deuxième train planétaire (RS2), la couronne dentée (HR1, HR2) peut être connectée au porte-satellites (PT1, PT2).

11. Boîte de vitesses épicycloïdale selon l'une quelconque des revendications 1 à 10, **caractérisée en ce que** l'élément de commutation (K3, K3', K3'') qui est prévu pour établir une connexion entre deux des éléments incluant la couronne dentée (HR2), le porte-satellites (PT2) et la roue solaire (SR2) du deuxième train planétaire (RS2), est réalisé sous forme d'élément de commutation par friction destiné à servir en outre d'élément de commutation de charge ou de démarrage.

12. Boîte de vitesses épicycloïdale selon l'une quelconque des revendications 1 à 11, **caractérisée en ce qu'**elle peut être amenée dans une position de commutation pour charger un accumulateur d'énergie électrique lorsque le véhicule est stationnaire ou roule.
